(19) Europäisches Patentamt
European Patent Office
Office européen des brevets

(11) EP 4 542 753 A1

(12) **EUROPEAN PATENT APPLICATION**
published in accordance with Art. 153(4) EPC

(43) Date of publication:
**23.04.2025 Bulletin 2025/17**

(21) Application number: **22967458.5**

(22) Date of filing: **05.12.2022**

(51) International Patent Classification (IPC):
***H01M 50/409*** *(2021.01)* ***H01M 50/431*** *(2021.01)*

(52) Cooperative Patent Classification (CPC):
**H01M 50/409; H01M 50/431**

(86) International application number:
**PCT/CN2022/136441**

(87) International publication number:
**WO 2024/119290 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **CONTEMPORARY AMPEREX TECHNOLOGY (HONG KONG) LIMITED**
**Central (HK)**

(72) Inventors:
- **WEI, Manxiang**
  **Ningde City, Fujian 352100 (CN)**
- **XIAO, Zhiwei**
  **Ningde City, Fujian 352100 (CN)**
- **YANG, Jianrui**
  **Ningde City, Fujian 352100 (CN)**
- **XU, Ming**
  **Ningde City, Fujian 352100 (CN)**
- **LI, Lei**
  **Ningde City, Fujian 352100 (CN)**
- **AJIA, Zigu**
  **Ningde City, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SEPARATOR AND PREPARATION METHOD THEREFOR, SECONDARY BATTERY, AND ELECTRICAL APPARATUS**

(57) The present application discloses a separator, a method for preparing the same, a secondary battery and an electrical device, wherein the separator comprises a substrate and a coating provided on at least one side of the substrate, wherein the coating comprises first particles and second particles, the first particles being organic particles and having an average particle size denoted as D1, the second particles having an average particle size denoted as D2, such that the coating satisfies: $1 < D1/D2 \leq 10$. The separator has good heat resistance as well as a good wetting effect and a liquid-retaining effect on the electrolytic solution, so as to enable the secondary battery to have better thermal safety performance and better cycling performance.

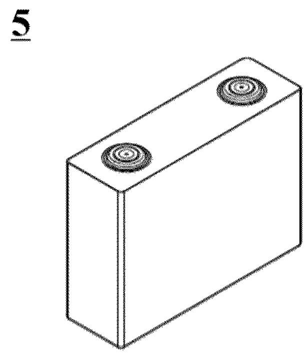


FIG. 1

EP 4 542 753 A1

**Description**

## TECHNICAL FIELD

The present application belongs to the technical field of secondary batteries, in particular to a separator, a method for preparing the same, a secondary battery and an electrical device.

## BACKGROUND

In recent years, secondary batteries have been widely used in electrical devices, such as power tools, electric transportation vehicles, energy storage devices, and the like, due to characteristics such as good electrochemical performance and safety performance.

With the promotion and application of secondary batteries, the performance requirements for them have become higher. However, in the related technology, when the temperature of a secondary battery is elevated, the thermal safety performance decreases and even causes safety problems. In addition, the elevated temperature of the secondary battery may also cause its cycling performance to decrease, thereby causing the secondary battery to fail to meet current requirements.

## SUMMARY

An object of the present application is to provide a separator, a method for preparing the same, a secondary battery and an electrical device, the separator having good heat resistance as well as a good wetting effect and a liquid-retaining effect on the electrolytic solution, so as to enable the secondary battery to have a better thermal safety performance and a better cycling performance.

A first aspect of the present application provides a separator comprising a substrate and a coating provided on at least one side of the substrate, wherein the coating comprises first particles and second particles, the first particles being organic particles and having an average particle size denoted as D1, the second particles having an average particle size denoted as D2, such that the coating satisfies: $1 < D1/D2 \leq 10$.

In the separator provided in the present application, the first particles are organic particles and the coating satisfies the above relationship, which can enable the first particles and the second particles to be better overlapped with each other in the coating; the organic particles have good heat resistance when the substrate is subjected to heat shrinkage, and the organic particles can be rapidly extruded between the organic particles, between the second particles, and/or between the organic particles and the second particles, which can provide the substrate with a force opposite to the direction of shrinkage, thereby improving the thermal safety performance of the secondary battery. In addition, the filling of the second particles between the first particles can result in the formation of a higher number of pores in the coating, which in turn can improve the wetting effect of the electrolytic solution on the isolation film, so as to facilitate the transport of ions in the separator, thereby improving the cycling performance of the secondary battery.

In some embodiments of the present application, the coating satisfies: $2 \leq D1/D2 \leq 8$; optionally, $3 \leq D1/D2 \leq 7$. The coating satisfies the above relationship, which can help the particles to be better overlapped with each other, and then, when the substrate is subjected to heat shrinkage, the rapid contact and the extrusion between the particles can provide the force opposite to the direction of shrinkage of the substrate, which further reduces the shrinkage degree of the substrate, so as to enhance the deformation resistance of the substrate, thereby reducing the probability of occurrence of short circuit of the positive electrode plate and the negative electrode plate in the secondary battery, so that the thermal safety performance thereof can be further improved.

In some embodiments of the present application, $0.02\mu m \leq D1 \leq 3\mu m$, optionally, $0.5\mu m \leq D1 \leq 2\mu m$. When the average particle size D1 of the first particles is within the suitable range described above, it helps the electrolytic solution to infiltrate the separator to provide the cycling performance of the secondary battery, and at the same time, it may also help the overlapping between the particles, which in turn quickly provides a force in the opposite direction of the separator when the separator is subjected to heat, so as to reduce the shrinkage degree of the separator when the separator is subjected to heat to improve the thermal safety performance of the secondary battery.

In some embodiments of the present application, $0.01\mu m \leq D2 \leq 2\mu m$; optionally, $0.1\mu m \leq D2 \leq 1\mu m$. The second particles having the average particle size D2 within the above suitable range help the electrolytic solution to infiltrate the separator to provide the cycling performance of the secondary battery, and at the same time help the particles overlap to rapidly provide, when the heat is applied to the separator, the force in the opposite direction of the heat applied to the separator, so as to reduce the shrinkage degree of the separator to improve the thermal safety performance of the secondary battery.

In some embodiments of the present application, the first particles have a volume distribution particle size $D^1v90$ of $\leq 3.0\ \mu m$, optionally $0.1\ \mu m \leq D^1v90 \leq 2.0\ \mu m$. The volume distribution particle size $D^1v90$ of the first particles is within the

above range, so that the stacking density of the first particles can be increased, and at the same time, the coating can be made to have a suitable thickness to increase the energy density of the secondary battery.

In some embodiments of the present application, the first particles have a volume distribution particle size $D^1v50$ of ≤ 2 μm, optionally 0.01 μm ≤ $D^1v50$ ≤ 1.5 μm. The volume distribution particle size $D^1v50$ of the first particles within the above range can help to enhance the close contact between the first particles, so that neighboring particles can overlap with each other, and when the substrate is subjected to heat shrinkage, the rapid contact and compression among the particles can provide a force opposite to the direction of shrinkage of the substrate, thereby further reducing the shrinkage degree of the substrate to enhance the deformation resistance of the substrate, thereby reducing the probability of the occurrence of a short circuit of the positive electrode plate and the negative electrode plate of the secondary battery, so that the thermal safety performance thereof can be further improved.

In some embodiments of the present application, the first particles has a specific surface area of greater than or equal to 3 $m^2/g$, optionally 10 $m^2/g$-100 $m^2/g$. The specific surface area of the first particles is set in the above suitable range, which can increase the contact area between the first particles and the electrolytic solution, and thus help improve the wetting effect and the liquid-retaining effect of the electrolytic solution on the separator.

In some embodiments of the present application, the first particle has a particle size distribution ($D^1v90$-$D^1v10$)/$D^1v50$ of ≤1.5, optionally 0.5≤($D^1v90$-$D^1v10$)/$D^1v50$≤1.0.

In some embodiments of the present application, the second particle has a volume distribution particle size $D^2v90$ of ≤ 2μm; optionally 0.3μm ≤ $D^2v90$ ≤ 1.5μm.

In some embodiments of the present application, the second particle has a volume distribution particle size $D^2v50$ of ≤1.5μm; optionally 0.2μm≤$D^2v50$≤1μm.

In some embodiments of the present application, the second particle has a specific surface area of greater than or equal to 10 $m^2/g$. The specific surface area of the second particles is set within the above suitable range, which can increase the contact area between the second particles and the electrolytic solution, and thus help to improve the wetting effect and the liquid-retaining effect of the electrolytic solution on the separator.

In some embodiments of the present application, the second particle has a particle size distribution ($D^2v90$-$D^2v10$)/D2v50 of ≤1.0, optionally 0.2≤($D^2v90$-$D^2v10$)/$D^2v50$≤0.8.

In some embodiments of the present application, the weight percentage of the first particles in the coating is denoted as A and the weight percentage of the second particles in the coating is denoted as B. The coating satisfies: 1 < A/B ≤ 10; optionally 3 ≤ A/B ≤ 6.

In some embodiments of the present application, the weight percentage of the first particles in the coating is denoted as A, and the weight percentage of the second particles in the coating is denoted as B. The coating satisfies: A ≥50%, optionally 70% ≤ A ≤ 90%; and/or, the coating satisfies: B ≤ 35%, optionally 5% ≤ B ≤ 25%.

In some embodiments of the present application, the first particles comprise one or more of silicone particles, melamine formaldehyde resin particles, phenolic resin particles, polyester particles, polyimide particles, polyamide imide particles, polyarylamide particles, polyphenylene sulphide particles, polysulfone particles, polyethersulfone particles, polyetheretherketone particles, and polyarylene etherketone particles. Optionally, the first particles comprise silicone particles.

In some embodiments of the present application, the first particles comprise silicone particles, and the silicone particles comprise a first polymer comprising a first structural unit, a second structural unit, and a third structural unit.

The first structural unit has a structure as shown in Formula (I):

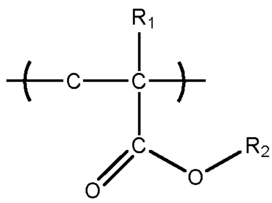

Formula (I).

In Formula (I), $R_1$ includes one or more of a hydrogen atom, or a substituted or unsubstituted C1-C5 alkyl; optionally, R1 includes one or more of a hydrogen atom, or a substituted or unsubstituted C1-C3 alkyl;

$R_2$ includes one or more of a substituted or unsubstituted C1-C20 alkyl, a substituted or unsubstituted C3-C20 cycloalkyl, or a substituted or unsubstituted C1-C20 hydroxyalkyl; optionally, $R_2$ includes one or more of a C1-C12 alkyl, a C3-C12 cycloalkyl, or a C1-C12 hydroxyalkyl.

The second structural unit is shown in Formula (II):

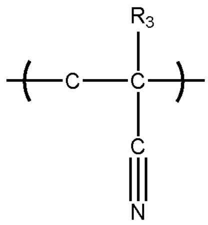

Formula (II).

In Formula (II), $R_3$ includes one or more of a hydrogen atom, or a substituted or unsubstituted C1-C5 alkyl group; optionally, $R_3$ includes one or more of a hydrogen atom, or a substituted or unsubstituted C1-C3 alkyl group.

The third structural unit is shown in Formula (III):

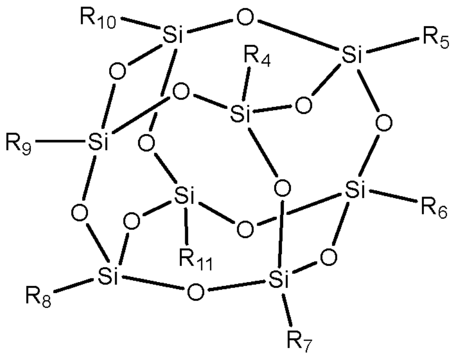

Formula (III).

In Formula (III), each of $R_4$ to $R_{11}$ independently includes one or more of a substituted or unsubstituted C1-C10 alkyl group, or a structural unit as shown in Formula (III-1), wherein at least one of $R_4$ to $R_{11}$ is a structural unit as shown in Formula (III-1):

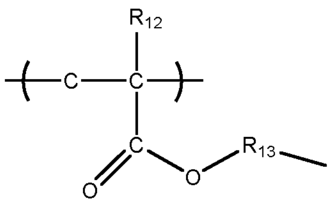

Formula (III-1).

In Formula (III-1), $R_{12}$ includes one or more of a hydrogen atom, or a substituted or unsubstituted C1-C5 alkyl; optionally, $R_{12}$ includes one or more of a hydrogen atom, or a substituted or unsubstituted C1-C3 alkyl;

$R_{13}$ is selected from substituted or unsubstituted C1-C10 alkyl; optionally, $R_{13}$ is selected from substituted or unsubstituted C3-C10 alkyl.

In some embodiments of the present application, based on the total molar amount of the first structural unit, the second structural unit, and the third structural unit, the molar content of the first structural unit is denoted as a%, in which $65 \leq a \leq 95$; optionally, $70 \leq a \leq 85$; and/or, based on the total molar amount of the first structural unit, the second structural unit, and the third structural unit, the molar content of the second structural unit is denoted as b%, in which $0<b\leq15$; optionally, $5\leq b\leq10$; and/or, based on the total molar amount of the first structural unit, the second structural unit, and the third structural unit, the molar content of the third structural unit is denoted as c%, in which $0<c\leq10$; optionally, $5\leq c\leq9$.

In some embodiments of the present application, the molar content of the first structural unit is denoted as a%, the molar content of the second structural unit is denoted as b%, and the molar content of the third structural unit is denoted as c%, based on the total molar amount of the first structural unit, the second structural unit, and the third structural unit; and the silicone particles satisfy one or more of the conditions (1) to (3):

$$(1)\ 7 \leq a/b \leq 14;$$

$$(2)\ 8 \leq a/c \leq 16;$$

(3) a:b:c is (13-15):(2-4):(2-4).

In some embodiments of the present application, the silicone particles further comprise a second polymer comprising a structural unit shown in Formula (a):

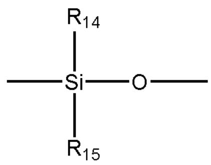

Formula (a).

In Formula (a), $R_{14}$ and $R_{15}$ each independently include one or more of a substituted or unsubstituted C1-C10 alkyl, hydroxyl group, or amino group; optionally, $R_{14}$ and $R_{15}$ each independently include one or more of a substituted or unsubstituted C1-C6 alkyl, hydroxyl group, or amino group.

Optionally, the second polymer comprises one or more of a polymethylsiloxane, a polydimethylsiloxane, a polydiethylsiloxane, a polymethylhydroxysiloxane, or a polymethylaminosiloxane.

In some embodiments of the present application, the silicone particle has a number average molecular weight of 30,000-70,000, optionally 40,000-50,000. When the number average molecular weight of the silicone particles is in the above range, it is conducive to the formation of silicone particles having smaller particle size, and when applied to the separator, it is possible to realize the light and thin coating on the separator and reduce the overall thickness of the separator, thereby facilitating the improvement of the energy density of the secondary battery; and also reducing the risk of the silicone particles blocking the substrate in the separator, and realizing the purpose of improving the overall air permeability and other properties of the separator.

In some embodiments of the present application, based on the total mass of the silicone particles, the moisture content of the silicone particles is less than or equal to 3000μg/g; optionally 600μg/g-2800μg/g.

In some embodiments of the present application, the second particles comprise one or more of inorganic particles, polymer particles; optionally, the second particles comprise inorganic particles.

In some embodiments of the present application, the inorganic particles comprise one or more selected from inorganic particles having a dielectric constant of 5 or higher, inorganic particles having the ability to transport reactive ions, and inorganic particles capable of undergoing electrochemical oxidation and reduction.

In some embodiments of the present application, the polymer particles comprise one or more of silicone particles, melamine formaldehyde resin particles, phenolic resin particles, polyester particles, polyimide particles, polyamide imide particles, polyarylamide particles, polyphenylene sulphide particles, polysulfone particles, polyethersulfone particles, polyetheretherketone particles, and polyarylene etherketone particles.

In some embodiments of the present application, the substrate has a thickness of less than or equal to 16 μm, optionally 3 μm-9 μm.

In some embodiments of the present application, the substrate has a porosity of greater than or equal to 20%, optionally 25%-45%.

In some embodiments of the present application, the coating has a thickness of 0.1μm-5μm; optionally 0.5μm-3μm. The thickness H of the coating is within the above range, which can help to improve the degree of close packing between particles in the coating to further improve the thermal safety performance of the secondary battery.

In some embodiments of the present application, the coating has a porosity of greater than or equal to 20%; optionally 25%-50%. Under the condition that the coating contains silicone particles, the porosity of the coating is within the above range, which can further improve the wetting effect and the liquid-retaining effect of the electrolytic solution on the separator, so as to favor the transmission of ions in the separator, and thus improve the cycling performance of the secondary battery.

In some embodiments of the present application, the separator has a longitudinal heat shrinkage rate of less than or equal to 3% at 150° C for 1h.

In some embodiments of the present application, the separator has a transverse heat shrinkage rate of less than or equal to 2% at 150°C for 1h.

In some embodiments of the present application, the separator has an air permeability of less than or equal to 200s/100mL, optionally 150s/100mL-200s/100mL.

In some embodiments of the present application, the separator has a longitudinal tensile strength of greater than or equal to 2700 kg/cm$^2$.

In some embodiments of the present application, the separator has a transverse tensile strength of greater than or equal to 2500 kg/cm$^2$.

In some embodiments of the present application, the separator has a wetted length of 20mm-100mm, optionally

40mm-70mm.

A second aspect of the present application provides a method for preparing the separator of the first aspect of the present application, comprising the steps of:

providing a substrate;
mixing first particles and second particles in a solvent to formulate a coating slurry;
applying the coating slurry on at least one side of the substrate to form a slurry coating, and drying and treating the slurry coating to form a coating to obtain the separator;
wherein the first particles are organic particles, the first particles have an average particle size denoted as D1, the second particles have an average particle size denoted as D2, and $1<D1/D2\leq 10$.

A third aspect of the present application provides a secondary battery comprising the separator of the first aspect of the present application or the separator obtained by the preparation method of the second aspect of the present application.

A fourth aspect of the present application provides an electrical device comprising the secondary battery of the third aspect of the present application.

## DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.

FIG. 1 is a schematic diagram of a secondary battery according to an embodiment of the present application.
FIG. 2 is an exploded view of a secondary battery according to the embodiment of the present application as shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to the embodiment of the present application as shown in FIG. 4.
FIG. 6 is a schematic diagram of an electrical device according to an embodiment of the present application using the secondary battery of the present application as power.

The drawings are not drawn to actual scale.

Reference numerals are as follows:

1. Battery pack; 2. Upper box body; 3. Lower box body; 4. Battery module; 5. Secondary battery; 51. Casing; 52. Electrode assembly; 53. Cover plate.

## DETAILED DESCRIPTION

Hereinafter, embodiments of the separator of the present application, the method for preparing the same, and the secondary battery and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is

expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

In the present application herein, unless otherwise stated, the terms "first", "second", etc. are used only for descriptive purposes and are not to be understood as indicating or implying relative importance or implicitly specifying the number of technical features indicated.

The term "more than one" means two or more, unless otherwise stated and specifically limited.

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Secondary batteries are widely used in electrical devices, such as power tools, electric vehicles, energy storage devices, and other electrical devices, due to characteristics such as good electrochemical performance and safety performance.

With the promotion and application of secondary batteries, the performance requirements for them have become higher, among which the thermal safety performance and the cycling performance of secondary batteries have become two focuses of attention. Typically, a secondary battery includes an electrode assembly and an electrolytic solution, and the electrode assembly includes a positive electrode plate, a negative electrode plate, and a separator, and the separator is set between the positive electrode plate and the negative electrode plate, which mainly serves to prevent the positive electrode plate and the negative electrode plate from short-circuiting, and at the same time allows the active ions to freely pass through to form a circuit. Thus, it can be seen that the separator is an important component for improving its thermal safety performance and cycling performance.

Currently, the substrate material of the separator is usually a polyolefin film, which undergoes an obvious heat shrinkage when subjected to heat, which may lead to short circuit of the positive electrode plate and the negative electrode plate in the secondary battery, affecting the thermal safety performance and the cycling performance of the secondary battery. Therefore, there is an urgent need to improve the thermal safety performance and cycling performance of the secondary battery.

In view of this, the present application provides a separator and a preparation method thereof, a secondary battery, and an electrical device, wherein the separator has good heat resistance as well as good wetting effect and liquid-retaining effect on the electrolytic solution, so as to enable the secondary battery to have better thermal safety performance and cycling performance.

## Separator

A first aspect of the present application provides a separator comprising a substrate and a coating provided on at least one side of the substrate, wherein the coating comprises first particles and second particles, the first particles being organic particles and having an average particle size denoted as D1, the second particles having an average particle size denoted as D2, such that the coating satisfies: $1 < D1/D2 \leq 10$.

In the separator provided in the present application, the first particles are organic particles and the coating

satisfies the above relationship, which can enable the first particles and the second particles to be better overlapped with each other in the coating; the organic particles have good heat resistance when the substrate is subjected to heat shrinkage, and the organic particles can be rapidly extruded between the organic particles, between the second particles, and/or between the organic particles and the second particles, which can provide the substrate with a force opposite to the direction of shrinkage, thereby improving the thermal safety performance of the secondary battery. In addition, the filling of the second particles between the first particles can result in the formation of a higher number of pores in the coating, which in turn can improve the wetting effect of the electrolytic solution on the isolation film, so as to facilitate the transport of ions in the separator, thereby improving the cycling performance of the secondary battery.

In the present application, the average particle size of the material is known in the art and it can be determined using instruments and methods known in the art. For example, a picture can be obtained by measuring the material or the separator with a scanning electron microscope, a transmission electron microscope, or a particle size distribution instrument, and a plurality (e.g., more than 100) of test particles (e.g., a first particle, a second particle of the present application) can be randomly selected from the pictures, and the average of the shortest diagonal length of the particles can be counted as the average particle size.

In some embodiments of the present application, the coating satisfies: $2 \leq D1/D2 \leq 8$; optionally, $3 \leq D1/D2 \leq 7$. The average particle size D1 of the first particles and the average particle size D2 of the second particles satisfies the above relationship can help the particles to be overlapped with each other better, and then, when the substrate is subjected to heat shrinkage, the rapid contact and the compression among the particles can provide the force opposite to the direction of shrinkage of the substrate, which further reduces the shrinkage degree of the substrate, so as to enhance the deformation resistance of the substrate, thereby reducing the probability of occurrence of short circuit of the positive electrode plate and the negative electrode plate in the secondary battery, so that the thermal safety performance thereof can be further improved.

In some embodiments of the present application, the average particle size D1 of the first particles is 0.02μm-3.0μm, optionally 0.5μm-2μm. The average particle size D1 of the first particles is in the suitable range described above, which, while contributing to the electrolytic solution's infiltration of the separator to provide the cycling performance of the secondary battery, also contributes to the overlapping between the particles, which in turn, when the separator is subjected to heat, can quickly provide a force in the direction opposite to the direction in which the separator is heated, to improve the thermal safety performance of the secondary battery by reducing the degree of shrinkage of the separator when heated. Exemplarily, the average particle size D1 of the first particles may also be, but is not limited to, 0.04μm-2.5μm, 0.1μm-2.3μm, 0.5μm-2μm, 0.8μm-1.8μm, 1.0μm-1.5μm, or 1.2μm-1.4μm.

In some specific examples, the average particle size D1 of the first particles may be, but is not limited to, 0.02μm, 0.03μm, 0.04μm, 0.05μm, 0.06μm, 0.07μm, 0.08μm, 0.09μm, 0.1μm, 0.15μm, 0.2μm, 0.25μm, 0.3μm, 0.35μm, 0.4μm, 0.45μm, 0.5μm, 0.55μm, 0.6μm, 0.65μm, 0.7μm, 0.75μm, 0.80μm, 0.85μm, 0.9μm, 0.95μm, 1.0μm, 1.05μm, 1.1μm, 1.15μm, 1.2μm, 1.25μm, 1.3μm, 1.35μm 1.4μm, 1.45μm, 1.5μm, 1. 55μm, 1.60μm, 1.65μm, 1.7μm, 1.75μm, 1.8μm, 1.85μm, 1.9μm, 1.95μm, 2.0μm, 2.05μm, 2.1μm, 2.15μm, 2.2μm, 2.25μm, 2.3μm, 2.35μm m, 2.4μm, 2.45μm, 2.5μm, 2.55μm, 2.6μm, 2.65μm, 2.7μm, 2.75μm, 2.8μm, 2.85μm, 2.9μm, 2.95μm, or 3.0μm.

In some embodiments of the present application, the volume distribution particle size $D^1v90$ of the first particles is $D^1v90 \leq 3.0$μm, optionally 0.1μm $\leq D^1v90 \leq$ 2.0μm. The volume distribution particle size $D^1v90$ of the first particles is within the above ranges, which allows for an increase in the stacking density thereof while also enabling the coating to have a suitable thickness to increase the energy density of the secondary battery.

In some specific embodiments, the volume distribution particle size $D^1v90$ of the first particles can be, but is not limited to, 0.01μm, 0.02μm, 0.03μm, 0.04μm, 0.05μm, 0.06μm, 0.07μm, 0.08μm, 0.09μm, 0.1μm, 0.15μm, 0.2μm, 0.25μm, 0.3 μm, 0.35μm, 0.4μm, 0.45μm, 0. 5μm, 0. 55μm, 0.6μm, 0.65μm, 0.7μm,0.75μm, 0.80μm, 0.85μm, 0.9μm, 0.95μm, 1.0μm, 1.05μm, 1.1μm, 1.15μm, 1.2μm, 1.25μm, 1.3μm, 1.35μm, 1.4μm, 1.45μm, 1.5μm, 1. 55μm, 1.60μm, 1.65μm, 1.7μm, 1.75μm, 1.8μm, 1.85μm, 1.9μm,1.95μm, 2.0μm, 2.05μm, 2.1μm, 2.15μm, 2.2μm, 2.25μm, 2.3μm, 2.35μm, 2.4μm, 2.45μm, 2.5μm, 2.55μm, 2.6μm, 2.65μm, 2.7μm, 2.75μm, 2.8μm, 2.85μm, 2.9μm, 2.95μm, or 3.0μm.

In some embodiments of the present application, the volume distribution particle size $D^1v50$ of the first particles is $\leq$ 2μm, optionally 0.01μm $\leq D^1v50 \leq$ 1.5μm. The volume distribution particle size $D^1v50$ of the first particles is within the above ranges, which can help to enhance the close contact between the first particles, so that neighboring particles can be overlapped to each other, and when the substrate is subjected to heat shrinkage, the rapid contact and extrusion between the particles can provide a force opposite to the direction of shrinkage of the substrate, thereby further reducing the shrinkage degree of the substrate to enhance the deformation resistance of the substrate, thereby reducing the probability of the occurrence of a short-circuit of the positive electrode plate and the negative electrode plate of the secondary battery, so that the thermal safety performance thereof can be further improved.

In some embodiments, the volume distribution particle size D1v50 of the first particles may be, but is not limited to, 0.01μm, 0.02μm, 0.03μm, 0.04μm, 0.05μm, 0.06μm, 0.07μm, 0.08μm, 0.09μm, 0.1μm, 0.15μm, 0.2μm, 0.25μm, 0.3μm 0.35μm, 0.4μm, 0.45μm, 0. 5μm, 0. 55μm, 0.6μm, 0.65μm, 0.7μm,0.75μm, 0.80μm, 0.85μm, 0.9μm, 0.95μm, 1.0μm, 1.05μm, 1.1μm, 1.15μm, 1.2μm, 1.25μm, 1.3μm m, 1.35μm, 1.4μm, 1.45μm, or 1.5μm.

In some embodiments of the present application, the particle size distribution ($D^1v90-D^1v10)/D^1v50$ of the first particles is ≤1.5, optionally $0.5 \le (D^1v90-D^1v10)/D^1v50 \le 1.0$. When the particle size distribution of the first particles satisfies the above range, the particle size distribution of the first particles is more uniform, which is conducive to the first particles being uniformly dispersed in the coating and forming a coating with a more uniform thickness. Moreover, when the coating slurry is applied on the surface of the substrate, the risk of the first particles falling into the pores of the substrate can be reduced, so as to ensure the air permeability of the substrate; and since the first particles are mainly distributed in the coating, the heat resistance of the coating as a whole can be ensured.

Exemplarily, $(D^1v90-D^1v10)/D^1v50$ may be 0.05, 0.1, 0.15, 0.2, 0.25, 0.3, 0.4, 0.5, 0.6, 0.8, 0.9, 1.0, 1.1, 1.2, 1.3, 1.4, 1.5, or a range consisting of any two of the above values.

The volume distribution particle size Dv90 of the material has the meanings known in the art, which indicates the corresponding particle sizes when the cumulative volume distribution percentages of the material reach 90%, respectively, and can be measured by instruments and methods known in the art. For example, it can be determined using a laser particle size analyzer (e.g., Master Size 3000) with reference to GB/T 19077-2016 concerning the method for measuring particle size distribution with laser diffraction.

The volume distribution particle size Dv50 of the material has the meanings known in the art, which indicate the corresponding particle sizes when the cumulative volume distribution percentages of the material reach 50%, respectively, and can be measured by instruments and methods known in the art. For example, it can be determined using a laser particle size analyzer (e.g., Master Size 3000) with reference to GB/T 19077-2016 concerning the method for measuring particle size distribution with laser diffraction.

The volume distribution particle size Dv10 of the material has the meanings known in the art, which indicate the corresponding particle sizes when the cumulative volume distribution percentages of the material reach 10%, respectively, and can be measured by instruments and methods known in the art. For example, it can be determined using a laser particle size analyzer (e.g., Master Size 3000) with reference to GB/T 19077-2016 concerning the method for measuring particle size distribution with laser diffraction.

In some embodiments of the present application, the specific surface area of the first particles is greater than or equal to 3 $m^2/g$, optionally, 10 $m^2/g$-100 $m^2/g$. The surface area of the first particles is set in the above suitable range, which can increase the contact area between the first particles and the electrolytic solution, and thus help to improve the wetting effect and the liquid-retaining effect of the electrolytic solution on the separator.

In some examples, the specific surface area of the first particles may be, but is not limited to, $3m^2/g$, $3.5m^2/g$, $4m^2/g$, $4.5m^2/g$, $5m^2/g$, $5.5m^2/g$, $6m^2/g$, $6.5m^2/g$, $7m^2/g$, $7.5m^2/g$, $8m^2/g$, $8.5m^2/g$, $9m^2/g$, $9.5m^2/g$, $10m^2/g$, $10.5m^2/g$, $11m^2/g$, $11.5m^2/g$, $12m^2/g$, $12.5m^2/g$, $13m^2/g$, $13.5m^2/g$, $14m^2/g$, $14.5m^2/g$, $15m^2/g$, $15.5m^2/g$, $16m^2/g$, $16.5m^2/g$, $17m^2/g$, $17.5m^2/g$, $18m^2/g$, $19m^2/g$, $20m^2/g$, $21m^2/g$, $22m^2/g$, $23m^2/g$, $24m^2/g$, $25m^2/g$, $26m^2/g$, $27m^2/g$, $28m^2/g$, $29m^2/g$, $30m^2/g$, $31m^2/g$, $32m^2/g$, $33m^2/g$, $34m^2/g$, $35m^2/g$, $36m^2/g$, $37m^2/g$, $38m^2/g$, $39m^2/g$, $40m^2/g$, $41m^2/g$, $42m^2/g$, $43m^2/g$, $44m^2/g$, $45m^2/g$, $46m^2/g$, $47m^2/g$, $48m^2/g$, $49m^2/g$, $50m^2/g$, $55m^2/g$, $60m^2/g$, $65m^2/g$, $70m^2/g$, $75m^2/g$, $80m^2/g$, $85m^2/g$, $90m^2/g$, $95m^2/g$, or $100m^2/g$.

In some embodiments of the present application, the weight of the first particles and the weight of the second particles in the coating to meet a suitable ratio relationship can not only help to reduce the shrinkage degree of the separator to improve the thermal safety performance of the secondary battery, but also enable the first particles to be better overlapped to each other to form more pores, and further improve the wettability effect of the electrolytic solution to improve the cycling performance of the secondary battery.

In some embodiments of the present application, the weight percentage of the first particles in the coating is denoted as A and the weight percentage of the second particles in the coating is denoted as B. The coating satisfies: $1 < A/B \le 10$; optionally $3 \le A/B \le 6$.

In some embodiments of the present application, the weight percentage of the first particles in the coating is denoted as A, and the weight percentage of the second particles in the coating is denoted as B. The coating satisfies: A ≥50%, optionally 70% ≤ A ≤ 90%; and/or, the coating satisfies: B ≤ 35%, optionally 15% ≤ B ≤ 25%.

In some embodiments of the present application, the first particles comprise one or more of silicone particles, melamine formaldehyde resin particles, phenolic resin particles, polyester particles, polyimide particles, polyamide imide particles, polyarylamide particles, polyphenylene sulphide particles, polysulfone particles, polyethersulfone particles, polyetheretherketone particles, and polyarylene etherketone particles.

In some embodiments of the present application, the first particles comprise silicone particles. The silicone particles are organosiloxanes with a silicone-oxy-silicon bond (-Si-O-Si-) in the main chain, which can confer high heat resistance and chemical stability to the silicone due to the silicone-oxy-silicon bond being an inorganic bond with a high bonding energy, e.g., the silicone is able to be used for a long period of time at a temperature up to 200°C. The silicone can be used without grafting other groups on the side chain, and can also be grafted with organic groups, in which the grafting of organic groups can give the silicone good dispersion, etc., can improve the coating performance of silicone coatings, as well as the affinity with the substrate. The dispersion of silicone particles in the coating makes the separator have good heat resistance, thus improving the thermal safety performance of the secondary battery. **In** addition, the silicone particles can

form a structure with gaps between the particles, which can improve the wetting and retention properties of the separator to the electrolytic solution, thus promoting the transmission of active ions in the separator, so that the separator can improve the cycling performance of the secondary battery when applied in the secondary battery.

**In** some embodiments of the present application, the first particles comprise silicone particles, and the silicone particles comprise a first polymer comprising a first structural unit, a second structural unit, and a third structural unit.

The first structural unit has a structure as shown in Formula (I):

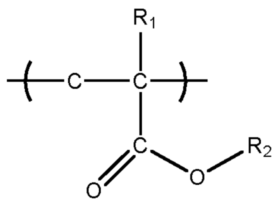

Formula (I);

In Formula (I), $R_1$ includes one or more of a hydrogen atom, or a substituted or unsubstituted C1-C5 alkyl; optionally, R1 includes one or more of a hydrogen atom, or a substituted or unsubstituted C1-C3 alkyl;

$R_2$ includes one or more of a substituted or unsubstituted C1-C20 alkyl, a substituted or unsubstituted C3-C20 cycloalkyl, or a substituted or unsubstituted C1-C20 hydroxyalkyl; optionally, $R_2$ includes one or more of a C1-C12 alkyl, a C3-C12 cycloalkyl, or a C1-C12 hydroxyalkyl;

The second structural unit is shown in formula (II):

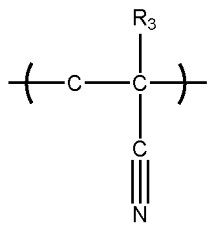

Formula (II).

In Formula (II), $R_3$ includes one or more of a hydrogen atom, or a substituted or unsubstituted C1-C5 alkyl group; optionally, $R_3$ includes one or more of a hydrogen atom, or a substituted or unsubstituted C1-C3 alkyl group;

The third structural unit is shown in Formula (III):

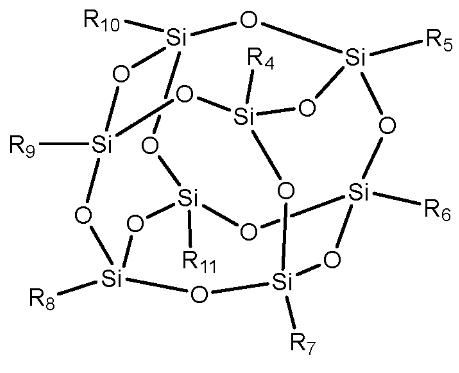

formula (III).

In Formula (III), each of $R_4$ to $R_{11}$ independently includes one or more of a substituted or unsubstituted C1-C10 alkyl group, or a structural unit as shown in Formula (III-1), wherein at least one of $R_4$ to $R_{11}$ is a structural unit as shown in Formula (III-1):

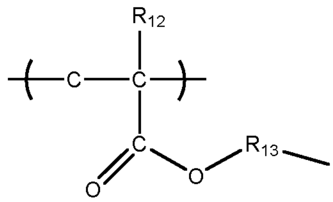

Formula (III-1).

In Formula (III-1), $R_{12}$ includes one or more of a hydrogen atom, or a substituted or unsubstituted C1-C5 alkyl; optionally, $R_{12}$ includes one or more of a hydrogen atom, or a substituted or unsubstituted C1-C3 alkyl; $R_{13}$ is selected from substituted or unsubstituted C1-C10 alkyls; optionally, $R_{13}$ is selected from substituted or unsubstituted C3-C10 alkyls.

In these embodiments, the flexible monomer chain segments in the molecular chain segments of the first structural unit are capable of modulating the glass transition temperature of the first polymer as well as improving the toughness and peel strength of the first polymer, which in turn contributes to good bonding properties. The second structural unit is capable of producing excellent swelling resistance and high bonding properties, and also helps to improve the ionic conductivity of the secondary battery. The polysilsesquioxane in the third structural unit improves the heat resistance properties of the first polymer. In addition, the first structural unit and the third structural unit can collaborate to have a synergistic effect in improving the bonding and heat resistance properties of the first polymer, and the first structural unit and the second structural unit can collaborate to have a synergistic effect in improving the thermal stability and swelling resistance of the first polymer and the like. Thus, the first polymer can further improve the heat resistance of the separator, so that the thermal safety performance of the secondary battery can be further improved.

In some embodiments of the present application, based on the total molar amount of the first structural unit, the second structural unit and the third structural unit, the molar content of the first structural unit is denoted as a%, in which $65 \leq a \leq 95$. When the molar content of the first structural unit is in the range described above, the boding property of the first polymer can be **improved,** and when the first polymer is applied to the separator, the first polymer and the separator's substrate can be significantly improved. Optionally, $70 \leq a \leq 90$. Exemplarily, the molar content of the first structural unit may be 65%, 70%, 75%, 80%, 85%, 90% or a range consisting of any two of the above values.

In some embodiments of the present application, the molar content of the second structural unit is denoted as b% based on the total molar amount of the first structural unit, the second structural unit and the third structural unit, in which $0 < b \leq 15$. The molar content of the second structural unit in the range described above can significantly improve the thermal stability of the first polymer. Optionally, $5 \leq b \leq 10$. Exemplarily, the molar content of the second structural unit may be 1%, 2%, 3%, 4%, 5%, 6%, 7%, 8%, 9%, 10%, 11%, 12%, 13%, 14%, 15%, or a range consisting of any two of the above values.

In some embodiments of the present application, the molar content of the third structural unit is denoted as c% based on the total molar amount of the first structural unit, the second structural unit and the third structural unit, in which $0 < c \leq 10$. When the molar content of the third structural unit is in the above ranges, it is possible to further improve the heat resistance of the first polymer. Optionally, $5 \leq c \leq 9$. Exemplarily, the molar content of the third structural unit may be 1%, 2%, 3%, 4%, 5%, 6%, 7%, 8%, 9%, 10% or a range consisting of any two of the above values.

The cyano groups in the first structural unit and the second structural unit can work synergistically to jointly improve the anti-swelling and bonding properties of the first polymer in order to enhance the bonding force and deformation resistance of the coating to the substrate, thereby improving the thermal stability of the separator. Thus, when the molar content a of the first structural unit and the molar content b of the second structural unit further satisfy that $7 \leq a/b \leq 14$, it is able to exert the synergistic effect between the first structural unit and the second structural, and improve the bonding and stability as well as the swelling resistance of the first polymer. Exemplarily, a/b may be 7, 8, 9, 10, 11, 12, 13, 14 or a range consisting of any two of the above values.

The polysilsesquioxane in the third structural unit of the secondary battery is able to synergize with the first structural unit to improve the overall heat resistance and bonding properties of the first polymer in order to enhance the heat resistance of the separator, thereby improving the thermal safety performance of the secondary battery. Thus, when the molar content a of the first structural unit and the molar content b of the second structural unit particularly further satisfy that $8 \leq a/c \leq 16$, it is able to exert the synergistic effect between the first structural unit and the third structural unit, improving the bonding performance and the heat-resistant performance of the first polymer. Exemplarily, a/c may be 8, 9, 10, 11, 12, 13, 14, 15, 16 or a range consisting of any two of the above values.

In some embodiments of the present application, the polymerization degree a of the first structural unit, the polymerization degree b of the second structural unit, and the polymerization degree c of the third structural unit satisfy: a:b:c=(13-15):(2-4):(2-4). When the polymerization degree of the first structural unit, the second structural unit and the third structural unit satisfy the above ratio, the three structural units can synergize with each other and jointly improve the bonding, swelling resistance and heat resistance of the polymer.

The first structural unit includes a variety of chemical structures, and specific chemical structures of the first structural unit are described below.

In some embodiments of the present application, $R_1$ is selected from a hydrogen atom and/or a methyl group.

In some embodiments of the present application, $R_2$ includes one or more of methyl, ethyl, n-propyl, isopropyl, n-butyl, sec-butyl, tert-butyl, n-pentyl, n-octyl, iso-octyl, 2-ethylhexyl, dodecyl, or isobornyl.

Exemplarily, the first structural unit includes one or more of the structures shown in Formula (I-1) to Formula (I-8):

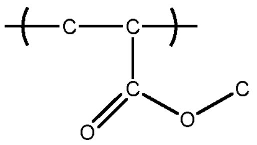 Formula (I-1), 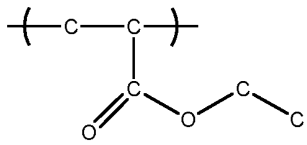 Formula (I-2),

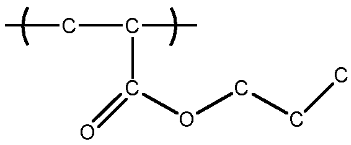 Formula (I-3), 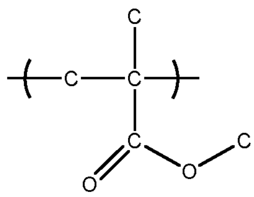 Formula (I-4),

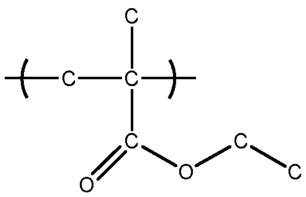 Formula (I-5), 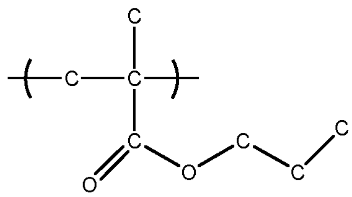 Formula (I-6),

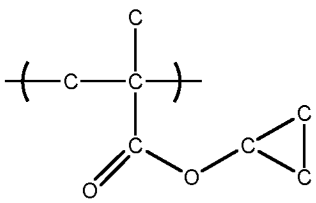 Formula (I-7), 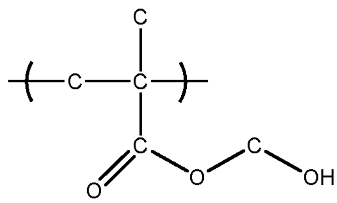 Formula (I-8).

The second structural unit includes a variety of chemical structures, and specific chemical structures of the second structural unit are described next.

In some embodiments of the present application, $R_3$ includes one or more of hydrogen atom or methyl group.

Exemplarily, the second structural unit includes one or more of the structures shown in Formula (II-1) to Formula (II-4):

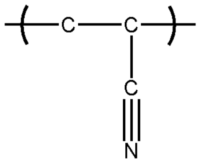 Formula (II-1), 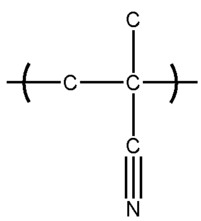 Formula (II-2), 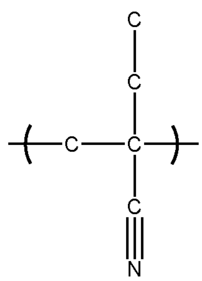 Formula (II-3),

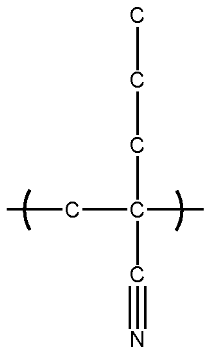

Formula (II-4).

The third structural unit includes a variety of chemical structures, and specific chemical structures of the third structural unit are described next.

In some embodiments of the present application, $R_4$ to $R_{11}$ are each independently selected from a structural unit as shown in Formula (III-1); optionally, $R_{12}$ comprises one or more of hydrogen atom, methyl, ethyl, n-propyl, isopropyl, n-butyl, sec-butyl, tert-butyl, or n-pentyl group; and/or, $R_{13}$ comprises one or more of n-propyl, isopropyl, n-butyl, sec-butyl, tert-butyl, n-pentyl, n-octyl, iso-octyl, or 2-ethylhexyl group.

In some embodiments, one of $R_4$ to $R_{11}$ is selected from a structural unit as shown in Formula (III-1); optionally, $R_{12}$ comprises one or more of hydrogen atom, methyl, ethyl, n-propyl, isopropyl, n-butyl, sec-butyl, tert-butyl, or n-pentyl group; and/or, $R_{13}$ is selected from one or more of n-propyl, isopropyl, n-butyl, sec-butyl, tert-butyl, n-pentyl, n-octyl, iso-octyl, or 2-ethylhexyl group.

In the present application, the type of group in the first polymer can be determined using infrared spectroscopy. For example, the infrared spectrum of a material can be tested to determine the characteristic peaks it contains, thereby determining the type of modified group. Specifically, the material can be analyzed by infrared spectroscopy using instruments and methods well known in the art, such as using an infrared spectrometer (e.g., an IS10 Fourier Transform Infrared Spectrometer from Nicorette (USA)), according to GB/T 6040-2019 (General rules for infrared analysis).

In some embodiments of the present application, the first polymer has a characteristic peak in the infrared spectrogram of 1750 $cm^{-1}$ to 1735 $cm^{-1}$, which indicates the presence of an ester group.

In some embodiments of the present application, the first polymer has a characteristic peak in the infrared spectrogram of 2260 $cm^{-1}$ to 2220 $cm^{-1}$, which indicates the presence of a cyano group.

In some embodiments of the present application, the first polymer has a characteristic peak in the infrared spectrogram of 1100 $m^{-1}$ to 1120 $cm^{-1}$, which indicates the presence of a Si-O-Si backbone of a sesquisiloxane.

In some embodiments of the present application, the first polymer may be prepared by a method comprising:

Step S100, providing a first monomer, a second monomer, and a third monomer;
Step S200, mixing the first monomer, the second monomer, and the third monomer, and generating a first polymer by a polymerization reaction in the presence of an initiator.

In the present application, the first monomer, the second monomer and the third monomer are mixed and copolymerized, and the resulting first polymer is a copolymer of the three monomers.

The first monomer has the structure shown in Formula (IV),

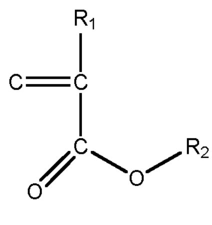

Formula (IV)

in which, $R_1$ includes a hydrogen atom, or a substituted or unsubstituted C1-C5 alkyl; optionally, $R_1$ is selected from one or more of a hydrogen atom, or a substituted or unsubstituted **C1-**C3 alkyl group;
$R_2$ includes a substituted or unsubstituted C1-C20 alkyl, a substituted or unsubstituted C3-C20 cycloalkyl, a substituted or unsubstituted C1-C20 hydroxyalkyl group; optionally, $R_2$ is selected from one or more of C1-C12 alkyls, C3-C12 cycloalkyls, and C1-C12 hydroxyalkyl groups.

The first monomer is an acrylate compound in which the carbon-carbon double bond opens to form the first structural unit as it undergoes polymerization.

Exemplarily, the first monomer comprises one or more of methyl acrylate, ethyl acrylate, n-propyl acrylate, isopropyl acrylate, n-butyl acrylate, isobutyl acrylate, sec-butyl acrylate, tert-butyl acrylate, n-pentyl acrylate, n-octyl acrylate, iso-octyl acrylate, 2-ethylhexyl acrylate, cyclohexyl acrylate, lauryl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate.

The second monomer has the structure shown in Formula (V),

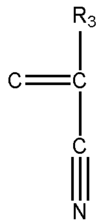

Formula (V)

in which $R_3$ includes a hydrogen atom, or a substituted or unsubstituted C1-C5 alkyl group; optionally, $R_3$ is selected from one or more of a hydrogen atom, or a substituted or unsubstituted C1-C3 alkyl group.

The second monomer is an acrylonitrile compound, in which the carbon-carbon double bond opens to form a second structural unit as it undergoes polymerization.

Exemplarily, the second monomer comprises acrylonitrile and/or methacrylonitrile.

The illustrated third monomer has the structure shown in Formula (VI):

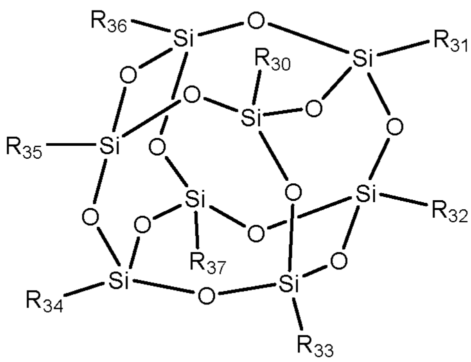

Formula (VI)

in which $R_{30}$ to $R_{37}$ each independently include one or more selected from substituted or unsubstituted C1-C10 alkyl groups or a structural unit as shown in Formula (VI-1), wherein at least one of $R_{30}$ to $R_{37}$ is a structural unit as shown in Formula (VI-1):

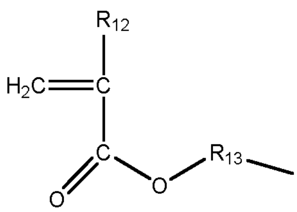

Formula (VI-1)

in which $R_{12}$ includes a hydrogen atom, or a substituted or unsubstituted C1-C5 alkyl group; optionally, $R_{12}$ is selected from one or more of a hydrogen atom, or a substituted or unsubstituted C1-C3 alkyl group;

$R_{13}$ is selected from substituted or unsubstituted C1-C10 alkyl groups; optionally, $R_{13}$ is selected from substituted or unsubstituted C3-C10 alkyl groups.

Exemplarily, the third monomer includes one or more of methacryloxypropyl cage polysilsesquioxane, methacryloxypropyl hepta-isobutyl polysilsesquioxane, methacryloxypropyl heptaoctyl polysilsesquioxane, acryloxypropyl cage polysilsesquioxane, acryloxypropyl hepta-isobutyl polysilsesquioxane, and methacryloxypropyl heptaoctyl polysilsesquioxane.

In some embodiments of the present application, Step S200 specifically comprises:

Step S210, adding the first monomer, the second monomer, and the third monomer to a solvent and an emulsifier and mixing them to form a mixed system;
Step S220, adding an initiator to the mixed system, and generating the first polymer by a polymerization reaction in the presence of the initiator.

The present application can carry out the copolymerization of multiple monomers by means of emulsion polymerization, and the polymerization method is simpler. Of course, the present application can also use other polymerization means, such as solution polymerization, suspension polymerization, etc., and the process parameters used in the polymerization process can be selected from those commonly used parameters in the art, and will not be repeated herein.

In some embodiments of the present application, the emulsifier comprises one or more of sodium dodecyl sulfate, sodium dodecyl benzene sulfonate, alkyldiphenyl oxide disulfonate, and ethoxylated alkylphenol ammonium sulfate.

In some embodiments of the present application, the ratio of the mass percent of the emulsifier to the mass percent of the first monomer, the second monomer, and the third monomer, based on the total mass of the mixed system, is from 0.1% to 5%, i.e., the amount of the emulsifier is from 0.1% to 5% of the mass of the three monomers. When the mass percent of the emulsifier is in the above range, the first monomer, the second monomer and the third monomer can be emulsified and dispersed in the solvent to form a more homogeneous system.

In some embodiments of the present application, the initiator comprises potassium persulfate and/or ammonium persulfate.

In some embodiments of the present application, the ratio of the mass percent of the initiator to the mass percent of the second monomer, the second monomer, and the third monomer, based on the total mass of the mixed system, is from 0.15% to 1%, i.e., the amount of initiator is from 0.1% to 5% of the mass of the three monomers. When the mass percent of the initiator is in the above range, sufficient polymerization can be ensured.

In some embodiments of the present application, the solvent may comprise water such as deionized water.

As a specific embodiment, the method comprises:

preparation of the prepolymer: co-mixing and stirring the deionized water, an emulsifier, a first polymeric monomer, a second polymeric monomer, and a third polymeric monomer, to obtain the prepolymer;
preparation of the first polymer: adding the emulsifier and the deionized water in a container, stirring and emulsifying for 30min to 60min, to obtain a uniform and stable emulsion; then slowly dropping the prepolymer prepared in the first step and the initiator solution (dissolving the initiator potassium persulfate and/or ammonium persulfate in deionized water to form a solution), warming to 90 °C to 110°C until the addition by drop is complete and holding at this temperature for 0.5h, cooling to 40°C, adjusting the pH to 7 to 8 with ammonia, filtering, discharging, and drying to obtain the polymer.

In some embodiments of the present application, the second particles comprise silicone particles which further comprise a second polymer, the second polymer comprising the structural unit shown in Formula (a):

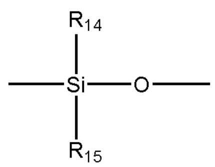

Formula (a);

in which, $R_{14}$ and $R_{15}$ each independently include one or more of substituted or unsubstituted C1-C10 alkyl, hydroxyl, or amino groups. Optionally, $R_{14}$ and $R_{15}$ each independently include one or more of substituted or unsubstituted C1-C6 alkyl, hydroxyl, or amino groups.

In some embodiments of the present application, the second polymer comprises one or more of a poly(methylsiloxane), a poly(dimethylsiloxane), a poly(diethylsiloxane), a poly(methylhydroxysiloxane), a poly(methylaminosiloxane).

Exemplarily, the silicone particles comprise at least one of the structures shown in Formula (a-1) to Formula (a-5):

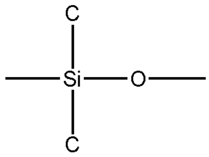 Formula (a-1), 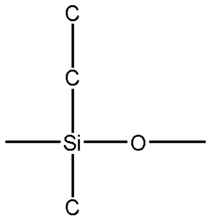 Formula (a-2), 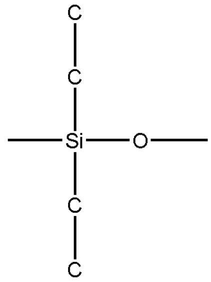 Formula (a-3),

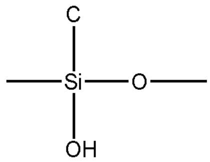 Formula (a-4), 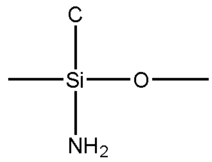 Formula (a-5).

The first polymer and the second polymer in the present application are used only as a distinction between the types of materials and are not sequential and quantitatively limiting.

In some embodiments of the present application, the silicone particles have a number average molecular weight of 30,000-70,000, optionally 40,000-50,000. Exemplarily, the silicone particles may have a number average molecular weight of 30,000, 35,000, 40,000, 45,000, 50,000, 55,000, 60,000, 65,000, 70,000 or a range consisting of any two of the above values. When the number average molecular weight of the silicone particles is in the above range, on the one hand, it can be made to have a relatively high viscosity, which is favorable for improving the bonding force between the separator and the positive and negative electrode plates when the silicone particles are applied to the separator. On the other hand, it is conducive to the formation of silicone particles with a small particle size, and when applied to the separator, it is possible to realize the light coating on the separator and reduce the overall thickness of the separator, thus facilitating the enhancement of the energy density of the secondary battery; moreover, the particle size of the silicone particles formed by the silicone particles will not be excessively small, which is able to reduce the risk of the silicone particles clogging the substrate in the separator, and improve the overall performance of the separator, such as air permeability.

In the present application, the number average molecular weight of the first polymer can be tested by gel permeation chromatography (GPC). Specifically, a GPC1515 instrument from Waters Corporation, USA, is used for the measurement, in which the sample is dissolved in tetrahydrofuran for more than 12 h, the concentration of the sample is 4 mg/mL, the sample is filtered, the temperature for the test is 25°C, and the flow rate of the test is 1 ml/min.

The inventors further found that, due to the long-term charging and discharging process of the secondary battery, the water in the separator will be gradually released and enter into the electrolytic solution, and the electrolytic solution has a high sensitivity to water, and is prone to produce hydrofluoric acid HF in contact with water, thereby increasing the acidity of the electrolytic solution, causing corrosion of the active material and the collector, etc., and possibly leading to the dissolution of the transition metal ions in the active material, thereby affecting the electrochemical performance of the secondary battery. Accordingly, the present application regulates the moisture content of the silicone particles to be less than or equal to 3000μg/g, optionally 600μg/g-2800μg/g, based on the total mass of the silicone particles. When the moisture content of the silicone particles is in the above range, they contain relatively little moisture content, which can reduce the risk of side reactions in the electrolytic solution during long-term charging and discharging cycles of the secondary battery, thereby improving the electrochemical performance of the secondary battery. Exemplarily, the moisture content of the silicone particles may be 600μg/g, 800μg/g, 1000μg/g, 1200μg/g, 1500μg/g, 1800μg/g, 2000μg/g, 2500μg/g, 2800μg/g, or a range consisting of any two of the above values.

In the present application, the moisture content of the silicone particles can be determined by a moisture meter, the test method can be the Karl Fischer Method, and the test instrument can be a Metrohm 831 Karl Fischer Moisture Titrator from Swiss.

In some embodiments of the present application, the average particle size D2 of the second particles is 0.01 μm-2μm, optionally 0.1μm ≤ D2 ≤ 1μm. The average particle size D2 of the second particles is within the suitable range described above, which, while contributing to the wetting of the separator by the electrolytic solution to provide the cycling performance of the secondary battery, may further contribute to the overlapping between the particles, and thus, when the separator is subjected to heat, it can quickly provide a force in the opposite direction of the heat applied to the separator to reduce the shrinkage degree of the separator when heated to improve the thermal safety performance of the secondary battery.

In some examples, the average particle size D2 of the second particles may be, but is not limited to, 0.01μm,

0.02μm, 0.03μm, 0.04μm, 0.05μm, 0.06μm, 0.07μm, 0.08μm, 0.09μm, 0.1μm, 0.15μm, 0.2μm, 0.25μm, 0.3μm, 0.35μm, 0.4μm, 0.45μm, 0. 5μm, 0. 55μm, 0.6μm, 0.65μm, 0.7μm, 0.75μm, 0.80μm, 0.85μm, 0.9μm, 0.95μm, 1.0μm, 1.05μm, 1.1μm, 1.15μm, 1.2μm, 1.25μm, 1.3μm, 1.35μm, 1.4μm, 1.45μm, 1.5μm, 1. 55μm, 1.60μm, 1.65μm, 1.7μm, 1.75μm, 1.8μm, 1.85μm, 1.9μm, 1.95μm, 2.0μm, or a range consisting of any two of the above values.

In some embodiments of the present application, the second particles have a volume distribution particle size $D^2v90$ of less than or equal to 2μm; optionally 0.3μm ≤ $D^2v90$ ≤ 1.5μm. The volume distribution particle size $D^2v90$ of the second particles within the above ranges enables them to be filled between the silicone particles to enhance contact between the particles.

In some examples, the volume distribution particle size $D^2v90$ of the second particles can be, but is not limited to, 0.01μm, 0.02μm, 0.03μm, 0.04μm, 0.05μm, 0.06μm, 0.07μm, 0.08μm, 0.09μm, 0.1μm, 0.15μm, 0.2μm, 0.25μm, 0.3μ m, 0.35μm, 0.4μm, 0.45μm, 0.5μm, 0. 55μm, 0.6μm, 0.65μm, 0.7μm,0.75μm, 0.80μm, 0.85μm, 0.9μm, 0.95μm, 1.0μm, 1.05μm, 1.1μm, 1.15μm, 1.2μm, 1.25μm, 1.3 μm, 1.35μm, 1.4μm, 1.45μm, 1.5μm, 1. 55μm, 1.60μm, 1.65μm, 1.7μm, 1.75μm, 1.8μm, 1.85μm, 1.9μm, 1.95μm, 2.0μm, or a range consisting of any two of the above values.

In some embodiments of the present application, the volume distribution particle size $D^2v50$ of the second particles is ≤ 1.5μm; optionally, 0.2μm ≤ $D^2v50$ ≤ 1μm. The volume distribution particle size D2v50 of the second particles is within the above ranges, which can help to enhance the close contact between the silicone particles, so that neighboring particles can be overlapped to each other, and when the substrate is subjected to heat shrinkage, the rapid contact and extrusion between the particles can provide a force opposite to the direction of shrinkage of the substrate, thereby further reducing the shrinkage degree of the substrate to enhance the deformation resistance of the substrate, thereby reducing the probability of the occurrence of a short-circuit of the positive electrode plate and the negative electrode plate in the secondary battery, so that the thermal safety performance thereof can be further improved.

In some embodiments, the volume distribution particle size $D^2v50$ of the second particles may be, but is not limited to, 0.01μm, 0.02μm, 0.03μm, 0.04μm, 0.05μm, 0.06μm, 0. 07μm, 0.08μm, 0.09μm, 0.1μm, 0.15μm, 0.2μm, 0.25μm, 0.3μm, 0.35μm, 0.4μm, 0.45μm, 0.5μm, 0. 55μm, 0.6μm, 0.65μm, 0.7μm,0.75μm, 0.80μm, 0.85μm, 0.9μm, 0.95μm, 1.0μm, 1.05μm, 1.1μm, 1.15μm, 1.2μm, 1.25μm, 1.3 μm, 1.35μm, 1.4μm, 1.45μm, 1.5μm or a range consisting of any two of these values.

In some embodiments of the present application, the specific surface area of the second particles is greater than or equal to 10 $m^2/g$. The specific surface area of the second particles is set within the above suitable range, which can increase the contact area of the second particles with the electrolytic solution, which in turn can help to improve the wetting effect of the electrolytic solution on the separator and the effect of retaining the liquid.

In some embodiments of the present application, the particle size distribution of the second particles ($D^2v90$-$D^2v10$)/D2v50 is ≤ 1.0, optionally 0.2 ≤ ($D^2v90$-$D^2v10$)/D2v50 ≤ 0.8. The particle size distribution of the second particles in the above range can further contribute to the overlapping between the particles in the coating, so that when the substrate is subjected to heat shrinkage, the particles quickly contact each other and be extruded to form a force opposite to the direction of shrinkage of the substrate, thereby reducing the shrinkage degree of the substrate and improving the heat resistance of the separator.

In some examples, the specific surface area of the second particles may be, but is not limited to, $10m^2/g$, $10.5m^2/g$, $11m^2/g$, $11.5m^2/g$, $12m^2/g$, $12.5m^2/g$, $13m^2/g$, $13.5m^2/g$, $14m^2/g$, $14.5m^2/g$, $15m^2/g$, $15.5m^2/g$, $16m^2/g$, $16.5m^2/g$, $17m^2/g$, $17.5m^2/g$, $18m^2/g$, $19m^2/g$, $20m^2/g$, $21m^2/g$, $22m^2/g$, $23m^2/g$, $24m^2/g$, $25m^2/g$, $26m^2/g$, $27m^2/g$, $28m^2/g$, $29m^2/g$, $30m^2/g$, $31m^2/g$, $32m^2/g$, $33m^2/g$, $34m^2/g$, $35m^2/g$, $36m^2/g$, $37m^2/g$, $38m^2/g$, $39m^2/g$, $40m^2/g$, $41m^2/g$, $42m^2/g$, $43m^2/g$, $44m^2/g$, $45m^2/g$, $46m^2/g$, $47m^2/g$, $48m^2/g$, $49m^2/g$, $50m^2/g$, $55m^2/g$, $60m^2/g$, $65m^2/g$, $70m^2/g$, $75m^2/g$, $80m^2/g$, $85m^2/g$, $90m^2/g$, $95m^2/g$, $100m^2/g$, or a range consisting any two of these values.

In some embodiments of the present application, the second particles comprise one or more of inorganic particles and polymer particles.

Exemplarily, the inorganic particles include one or more selected from inorganic particles having a dielectric constant of 5 or higher, inorganic particles having the ability to transport reactive ions, and inorganic particles capable of undergoing electrochemical oxidation and reduction.

Optionally, the inorganic particles having a dielectric constant of 5 or more include boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulphate, magnesium aluminum silicate, lithium magnesium silicate, sodium magnesium silicate, bentonite, hectorite, zirconium titanate, barium titanate, $Pb(Zr,Ti)O_3$ (abbreviated as PZT), $Pb_{1-m}La_mZr_{1-n}Ti_nO_3$ (abbreviated as PLZT, 0 < m < 1, 0 < n < 1), $Pb(Mg_3Nb_{2/3})O_3$-$PbTiO_3$ (abbreviated as PMN-PT), and their respective modified inorganic particles. Optionally, the modification of the respective inorganic particles may be chemical modification and/or physical modification. The chemical modification includes coupling agent modification (e.g., by silane coupling agent, titanate coupling agent, etc.), surfactant modification, polymer grafting modification, and the like. The physical modification may be mechanical force dispersion, ultrasonic dispersion, high-energy treatment and the like. The modification treatment can reduce the agglomeration of the

inorganic particles; furthermore, the modification of the inorganic particles by selecting coupling agents and surface active materials with specific functional groups can also help to improve the wettability characteristics of the coating to the electrolytic solution and improve the adhesion of the coating.

Optionally, the inorganic particles having ionic conductivity but not storing ions include one or more of $Li_3PO_4$, lithium titanium phosphate $Li_{x1}Ti_{y1}(PO_4)_3$, lithium titanium aluminum phosphate $Li_{x2}Al_{y2}Ti_{z1}(PO_4)_3$, $(LiAlTiP)_{x3}O_{y3}$-type glass, lithium lanthanum titanate $Li_{x4}La_{y4}TiO_3$, lithium germanium thiophosphate $Li_{x5}Ge_{y5}P_{z2}S_w$, lithium nitride $Li_{x6}N_{y6}$, $SiS_2$-type glass $Li_{x7}Si_{y7}S_{z3}$, and $P_2S_5$-type glass $Li_{x8}P_{y8}S_{z4}$, in which $0 < x1 < 2$, $0 < y1 < 3$, $0 < x2 < 2$, $0 < y2 < 1$, $0 < z1 < 3$, $0 < x3 < 4$, $0 < y3 < 13$, $0 < x4 < 2$, $0 < y4 <3$, $0 <x5 <4$, $0 <y5 <1$, $0 <z2 <1$, $0 <w <5$, $0 <x6 <4$, $0 <y6 <2$, $0 <x7 <3$, $0 <y7 <2$, $0 <z3 <4$, $0 <x8 <3$, $0 <y8 <3$, $0 <z4 <7$. Thereby, it is possible to further enhance the ionic transport properties of the separator.

Optionally, the inorganic particles capable of undergoing electrochemical reactions include at least one of a lithium-containing transition metal oxide, a lithium-containing phosphate, a carbon-based material, a silicon-based material, a tin-based material, and a lithium-titanium compound.

Optionally, the polymer particles include one or more of silicone particles, melamine formaldehyde resin particles, phenolic resin particles, polyester particles, polyimide particles, polyamide imide particles, polyarylamide particles, polyphenylene sulfide particles, polysulfone particles, polyethersulfone particles, polyetheretherketone particles, and polyarylene etherketone particles. The polymer particles include the same silicone particles as the first particles.

In some embodiments of the present application, the thickness of the coating is 0.1 μm-5 μm, optionally 0.5 μm-3 μm. The thickness of the coating is within the above ranges, which can help to increase the degree of close stacking between the particles in the coating in order to further improve the thermal safety performance of the secondary battery.

In some embodiments of the present application, the coating has a porosity of greater than or equal to 20%; optionally 25%-50%. Under the condition that the coating contains silicone particles, the porosity of the coating is within the above range, which can further improve the wetting effect of the electrolytic solution on the isolation film and the liquid-retaining effect, so as to favor the ion transport in the separator, and thus improve the cycling performance of the secondary battery.

In some embodiments of the present application, the thickness of the substrate is less than or equal to 16 μm. optionally, the thickness of the substrate is 3 μm-9 μm. The coating of the present application enables the thermal safety performance and the cycling performance of the separator to be improved, whereby a thinner substrate can be selected, thereby contributing to further improving the energy density of the secondary battery.

In some embodiments of the present application, the substrate has a porous structure, and the substrate has a porosity of greater than or equal to 20%. Optionally, the substrate has a porosity of 25%-50%. When the porosity of the porous substrate is within the above suitable range, it is favorable to further improve the ion transport characteristics of the separator to improve the cycling performance of the secondary battery.

The present application has no particular limitation on the material of the substrate, and any well-known substrate with good chemical and mechanical stability may be used, for example, the substrate may include at least one of a porous polyolefin-based resin film (e.g., at least one of polyethylene, polypropylene, polyvinylidene fluoride), a porous fiberglass, and a porous nonwoven fabric. The porous substrate may be a mono-layer film or a multi-layer composite film. When the porous substrate is a multi-layer composite film, the materials of the layers may be the same or different.

In some embodiments of the present application, the separator has a longitudinal heat shrinkage of less than or equal to 3% at 150°C for 1h.

In some embodiments of the present application, the separator has a transverse heat shrinkage of less than or equal to 2% at 150°C for 1h.

In these embodiments of the present application, the separator of the present application has a low heat shrinkage in both the transverse and longitudinal directions, whereby the thermal safety performance of the secondary battery can be further improved.

In some embodiments of the present application, the air permeability of the separator is less than or equal to 200 s/100 mL. Optionally, the air permeability of the separatpr is 150 s/100 mL-200 s/100 mL. The separator of the present application has a good air permeability, which is capable of improving the ionic transport characteristics and lowering the electrical resistance of the secondary battery to improve the cycling performance of the secondary battery.

In some embodiments of the present application, the separator has a longitudinal tensile strength of greater than or equal to 2700 kg/cm$^2$.

In some embodiments of the present application, the separator has a transverse tensile strength of greater than or equal to 2500 kg/cm$^2$.

In these embodiments, the separator of the present application has a high tensile strength in both the transverse direction and the longitudinal direction, whereby the probability of the separator breaking when the secondary battery expands is smaller, and thus the safety performance of the secondary battery can be further improved.

In the present application, the heat shrinkage, the tensile strength, and the air permeability of the separator all have meanings that are well known in the art, and can be measured by methods known in the art. For example, all the tests can be carried out with reference to standard GB/T 36363-2018.

In some embodiments of the present application, the wetted length of the separator is 20 mm-100 mm, optionally 40 mm-70 mm. The separator of the present application has good wetting characteristics by electrolytic solution, whereby the ion transfer characteristics and secondary battery capacity play can be enhanced.

In the present application, the wetted length of the separator has a meaning known in the art, and can be measured by methods known in the art. An exemplary test method is as follows: cutting the separator into a sample with a width of 5 mm and a length of 100 mm, placing the sample horizontally after fixing the two ends of the sample; taking 0.5 mg of electrolytic solution and dropping it in the center of the sample for 1 min, taking a picture and measuring the length of the electrolytic solution's diffusion, and thus obtaining the wetted length of the separator. In order to ensure the accuracy of the test results, more than one (e.g., 5 to 10) samples can be taken for testing, and the test results are obtained by calculating the average value. The electrolytic solution may be prepared as follows: mixing ethylene carbonate (EC), ethyl methyl carbonate (EMC), and diethyl carbonate (DEC) with a mass ratio of 30: 50: 20 to obtain an organic solvent, and dissolving sufficiently dried $LiPF^6$ in the above organic solvent to form an electrolytic solution with a concentration of 1 mol/L.

It should be noted that the coating parameters of the above separator are all coating parameters on a single side of the substrate.

When the coating is provided on both sides of the substrate, the coating parameters of any one of them satisfy the present application and are considered to fall within the protection scope of the present application.

## Method for preparing separator

A second aspect of the present application provides a method for preparing the separator film of the first aspect of the present application, comprising the following steps: S1, providing a substrate; S2, mixing the first particles and the second particles in a solvent, and formulating a coating slurry; S3, applying the coating slurry on at least one side of the substrate to form a slurry film layer, and drying and treating the slurry film layer to form a coating to obtain an separator; wherein the first particles are organic particles, the average particle size of the first particles is denoted as D1, the average particle size of the second particles is denoted as D2, and $1<D1/D2\leq10$.

In some embodiments of the present application, in S2, the solvent may be water, such as deionized water. The binder may be an aqueous solution-type binder, which has the advantage of being thermodynamically stable and environmentally friendly, thereby facilitating the preparation and application of the coating slurry. As an example, the aqueous solution-type binder may include at least one of an aqueous solution-type acrylic resin (e.g., acrylic acid, methacrylic acid, sodium acrylate monomer homopolymer, or copolymer with other copolymerized monomers), polyvinyl alcohol (PVA), isobutylene-maleic anhydride copolymer, and polyacrylamide. In addition, the coating slurry may include other components, for example, it may also include a dispersant, a wetting agent, and the like.

In some embodiments of the present application, in S3, the applying is performed by using a coating machine. The present application does not specifically limit the model of the coating machine, for example, a commercially available coating machine may be used. Optionally, the coating machine comprises a gravure roller, the gravure roller being used to transfer the coating slurry to the substrate. Optionally, the gravure roller has a **line count** of 150 LPI-250 LPI, more optionally 180 LPI-200 LPI. Furthermore, the coating method may be transfer coating, rotary spray coating, dip coating, etc.

In some embodiments of the present application, in S3, the coating speed may be controlled between 40 m/min-150 m/min, for example between 60 m/min-100 m/min. When the coating speed is within the above range, the film surface problem of the coating as well as the probability of uneven coating appearing can be effectively reduced, thereby further improving the energy density and safety performance of the secondary battery.

Controlling each of the above process parameters within the given range can further improve the performance of the separator of the present application. The person skilled in the art may selectively regulate one or more of the above process parameters according to the actual production situation.

Some of the raw materials used in the preparation method of the separator of the present application and their contents and other parameters can be referred to the separator of the first aspect of the embodiment of the present application, and will not be repeated herein. If not specifically stated, each of the raw materials used in the preparation method of the separator of the present application can be obtained by commercially purchasing.

## Secondary battery

A third aspect of embodiments of the present application provides a secondary battery. The secondary battery, also known as a rechargeable battery or accumulator, is a battery that can continue to be used by activating its active material by means of charging after the battery has been discharged. Typically, a secondary battery includes an electrode assembly and an electrolytic solution, and the electrode assembly includes a positive electrode plate, a negative electrode plate, and a separator. The separator is disposed between the positive electrode plate and the negative electrode plate, mainly functioning to prevent short circuit of the positive and negative electrodes while allowing active ions to pass through.

The present application does not specifically limit the type of the secondary battery, for example, the secondary battery may be a lithium-ion battery, a sodium-ion battery, etc., and in particular, the secondary battery is a lithium-ion secondary battery.

The secondary battery of the present application includes a separator of the first aspect of the present application or a separator obtained by the preparation method of the second aspect of the present application, the separator being disposed between the positive electrode plate and the negative electrode plate. Optionally, at least one side of the separator close to the negative electrode plate has a coating of the present application. As a result, the secondary battery of the present application has better thermal safety performance and cycling performance.

[Positive electrode plate]

In some embodiments of the present application, the positive electrode plate comprises a positive electrode current collector and a positive electrode film provided on at least one surface of the positive electrode current collector and containing a positive electrode active material. For example, the positive electrode current collector has two surfaces opposite each other in their own thickness direction, and the positive electrode film is provided on either or both of the two opposite surfaces of the positive electrode current collector.

When the secondary battery of the present application is a lithium-ion secondary battery, the positive electrode active material may include, but is not limited to, at least one of a lithium-containing transition metal oxide, a lithium-containing phosphate, or respective modified compounds thereof. Examples of the lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt alumina oxide, or respective modified compounds thereof. Examples of the lithium-containing phosphates may include, but are not limited to, at least one of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, or respective modified compounds thereof.

In some embodiments, in order to further increase the energy density of the secondary battery, the positive electrode active material for the lithium-ion secondary battery may include one or more of a lithium transition metal oxide having a general formula $Li_aNi_bCo_cM_aO_eA_f$, and respective modified compounds thereof. In the general formula $Li_aNi_bCo_cM_aO_eA_f$, 0.8≤a≤1.2, 0.5≤b<1, 0<c < 1, 0<d< 1, 1≤e≤2,0≤f≤1, M is selected from at least one of Mn, Al, Zr, Zn, Cu, Cr, Mg, Fe, V, Ti and B, and A is selected from at least one of N, F, S, and Cl.

As an example, the positive electrode active material for a lithium-ion secondary battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$ and $LiMnPO_4$.

When the secondary battery of the present application is a sodium-ion secondary battery, the positive electrode active material may include, but is not limited to, at least one of a sodium-containing transition metal oxide, a polyanionic material (e.g., phosphate, fluorophosphate, pyrophosphate, sulfate, etc.), or a Prussian blue material.

As examples, the positive electrode active material for the sodium-ion secondary battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue material, or a material having a general formula $X_pM'_q(PO_4)_rO_xY_{3-x}$. In the general formula $X_pM'_q(PO_4)_rO_xY_{3-x}$, 0 < p ≤ 4, 0 < q ≤ 2, 1 ≤ r ≤ 3, and 0 ≤ x ≤ 2, X is selected from at least one of $H^+$, $Li^+$, $Na^+$, $K^+$, and $NH_4^+$, and M' is a transition metal cation, optionally a transition metal cation at least one of V, Ti, Mn, Fe, Co, Ni, Cu or Zn, and Y is a halogen anion, optionally at least one of F, Cl or Br.

In the present application, the respective modified compounds of the above positive electrode active materials may be a doping modification and/or a surface coating modification of the positive electrode active material.

In some embodiments of the present application, the positive electrode active material layer may further comprise a conductive agent for positive electrode. The present application does not specifically limit the type of the conductive agent for positive electrode, and as examples, the conductive agent for positive electrode comprises at least one of superconducting carbon, conductive graphite, acetylene black, carbon black, Ketjen black, carbon dots, carbon nanotubes, graphene, or carbon nanofibers. In some embodiments of the present application, the mass percent of the conductive agent for positive electrode is ≤ 6 wt%, based on the total weight of the positive electrode film.

In some embodiments of the present application, the positive active material layer may further comprise a binder for positive electrode. The present application does not specifically limit the type of the binder for positive electrode, and as an example, the binder for positive electrode may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluoro-containing acrylate-based resin. In some embodiments of the present application, the mass percent of the binder for positive electrode is ≤ 5 wt%, based on the total weight of the positive electrode film. In some embodiments of the present application, the positive

electrode current collector may be a metal foil or a composite current collector. As an example of a metal foil, an aluminum foil may be used. The composite current collector may include a polymer material base layer and a metallic material layer formed on at least one surface of the polymer material base layer. As an example, the metallic material may include at least one of aluminum, aluminum alloy, nickel, nickel alloy, titanium, titanium alloy, silver, or silver alloy. As an example, the polymer material base layer may comprise at least one of polypropylene (PP), polyethylene terephthalate (PET), polybutylene terephthalate (PBT), polystyrene (PS), or polyethylene (PE).

The positive electrode film is usually formed by applying a positive electrode slurry to a positive electrode current collector, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

[Negative electrode plate]

In some embodiments of the present application, the negative electrode plate comprises a negative electrode current collector and a negative electrode film provided on at least one surface of the negative electrode current collector and comprising a negative electrode active material. For example, the negative electrode current collector has two surfaces opposite each other in the direction of its own thickness, and the negative electrode active material layer is provided on either or both of two opposite surfaces of the negative electrode current collector.

The negative electrode active material may be a negative electrode active material known in the art for use in secondary batteries. By way of example, the negative electrode active material includes, but is not limited to, at least one of natural graphite, artificial graphite, soft carbon, hard carbon, silicon-based material, tin-based material, or lithium titanate. The silicon-based material may include at least one of elemental silicon, a silicon oxide, a silicon carbon composite, a silicon nitrogen composite, or a silicon alloy material. The tin-based materials may include at least one of elemental tin, a tin oxide, or a tin alloy material.

In some embodiments of the present application, the negative electrode active material layer may optionally comprise a conductive agent for negative electrode. In the present application, the type of the conductive agent for negative electrode is not particularly limited and, as an example, the conductive agent for negative electrode may include at least one of superconducting carbon, conductive graphite, acetylene black, carbon black, Ketjen black, carbon dots, carbon nanotubes, graphene, or carbon nanofibers. In some embodiments of the present application, the mass percent of the conductive agent for negative electrode is ≤ 7 wt%, based on the total weight of the negative electrode film.

In some embodiments of the present application, the negative electrode active material layer may further optionally comprise a binder for negative electrode. In the present application, the type of the binder for negative electrode is not particularly limited and, as an example, the binder for negative electrode may include at least one of styrene-butadiene rubber (SBR), water-soluble unsaturated resin SR-1B, aqueous acrylic resins (e.g., polyacrylic acid PAA, polymethacrylic acid PMAA, polyacrylic acid sodium salt PAAS), polyacrylamide (PAM), polyvinyl alcohol (PVA), sodium alginate (SA), or carboxymethyl chitosan (CMCS). In some embodiments of the present application, the mass percent of the binder for negative electrode is < 6 wt%, based on the total weight of the negative electrode film.

In some embodiments of the present application, the negative electrode active material layer may optionally include other additives. As an example, the other additives may include thickeners, e.g., sodium carboxymethyl cellulose (CMC), and PTC thermistor material, etc. In some embodiments of the present application, the mass percent of the additive is ≤ 3 wt%, based on the total weight of the negative electrode film.

In some embodiments of the present application, the negative electrode current collector may be a metal foil or a composite current collector. As an example of a metal foil, a copper foil may be used. The composite current collector may include a polymer material base layer and a metallic material layer formed on at least one surface of the polymer material base layer. As an example, the metallic material may include at least one of copper, copper alloy, nickel, nickel alloy, titanium, titanium alloy, silver, or silver alloy. As an example, the polymer material base layer may comprise at least one of polypropylene (PP), polyethylene terephthalate (PET), polybutylene terephthalate (PBT), polystyrene (PS), or polyethylene (PE).

The negative electrode active material layer is usually made by applying a negative electrode slurry to the negative electrode current collector followed by drying and cold pressing. The negative electrode slurry is usually formed by dispersing the negative electrode active material, an optional conductive agent, an optional binder, and any other optional additives in a solvent and stirring uniformly. The solvent may be N-methylpyrrolidone (NMP) or deionized water, but is not limited thereto.

The negative electrode plate does not exclude other additional functional layers than the negative electrode film. For example, in some embodiments, the negative electrode plate described in the present application further comprises a conductive primer (e.g. being composed of a conductive agent and a binder) sandwiched between the negative electrode current collector and the negative electrode film and disposed on the surface of the negative electrode current collector. In some embodiments, the negative electrode plate of the present application further comprises a protective layer covering

the surface of the negative electrode film.

[Electrolytic solution]

During the charging and discharging process of the secondary battery, active ions repeatedly intercalate into and deintercalate back and forth between the positive electrode plate and the negative electrode plate, and the electrolytic solution plays the role of conducting active ions between the positive electrode plate and the negative electrode plate. The present application has no particular limitation on the type of the electrolytic solution, which may be selected according to actual needs.

In some embodiments, the electrolytic solution comprises an electrolyte salt and a solvent. The types of the electrolyte salt and the solvent are not specifically limited and can be selected according to actual needs.

When the secondary battery of the present application is a lithium-ion secondary battery, as an example, the electrolyte salt may comprise, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bis(trifluoromethylsulfonyl)imide (LiTFSI), lithium trifluoromethane sulfonate (LiTFS), lithium difluorooxalate borate (LiDFOB), lithium dioxalate borate (LiBOB), lithium difluorophosphate ($LiPO_2F_2$), lithium difluorodioxalate phosphate (LiDFOP) or lithium tetrafluorooxalate phosphate (LiTFOP).

When the secondary battery of the present application is a sodium-ion secondary battery, the electrolyte salt may include, but is not limited to, at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bisfluorosulfonimide (NaFSI), sodium bis(trifluoromethanesulfonyl)imide (NaTFSI), sodium trifluoromethane sulfonate (NaTFS), sodium difluorooxalate borate (NaDFOB), sodium dioxalate borate (NaBOB), sodium difluorophosphate ($NaPO_2F_2$), sodium difluorodioxalate phosphate (NaDFOP) or sodium tetrafluorooxalate phosphate (NaTFOP).

As an example, the solvent may comprise, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) or diethyl sulfone (ESE).

In some embodiments of the present application, the electrolytic solution may further optionally include additives. For example, the additives may include negative electrode film-forming additives, and may include positive electrode film-forming additives, and yet may include additives that can improve certain performances of secondary batteries, for example, additives that improve battery overcharge performance of secondary batteries, additives that improve high-temperature performance of secondary batteries, and additives that improve low-temperature performance of secondary batteries.

In some embodiments of the present application, the positive electrode plate, the separator, and the negative electrode plate may be made into an electrode assembly by a winding process or a stacking process.

In some embodiments of the present application, the secondary battery may include an outer package. The outer package may be used to encapsulate the electrode assembly and electrolytic solution.

In some embodiments of the present application, the outer package of the secondary battery may be a hard case, such as a hard plastic case, an aluminum case, a steel case, and the like. The outer package of the secondary battery may also be a soft package, such as a pouch-type soft package. A material of the soft bag can be plastic, such as at least one of polypropylene (PP), polybutylene terephthalate (PBT), and polybutylene succinate (PBS).

The shape of the secondary battery is not particularly limited in the present application, and it may be cylindrical, square, rectangular or any other shape. FIG. 1 is a schematic diagram of a secondary battery 5 of a rectangular structure as an example.

In some embodiments, as shown in FIG. 2, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery of the present application is well-known. In some embodiments of the present application, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode

assembly is placed in an outer package and dried, then the electrolytic solution is injected, followed by vacuum packaging, standing, formation, shaping, and other processes, thereby obtaining the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

FIG. 3 is a schematic diagram of the battery module as an example. As shown in FIG. 3, in the battery module 4, a plurality of secondary batteries 5 may be arranged in sequence along the longitudinal direction of the battery module 4. Certainly, they can also be arranged in any other manner. Furthermore, a plurality of secondary batteries 5 can be fixed with fasteners.

Optionally, the battery module 4 may further include a housing having an accommodating space in which a plurality of secondary batteries 5 are accommodated.

In some embodiments of the present application, the above-mentioned battery modules can also be assembled into a battery pack, and the number of battery modules included in the battery pack can be adjusted according to the application and capacity of the battery pack.

FIGS. 4 and 5 are schematic diagrams of the battery pack 1 as an example. As shown in FIGS. 4 and 5, the battery pack 1 may include a battery case and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery case in any manner.

## Electrical device

A fourth aspect of the present application provides an electrical device comprising at least one of the secondary battery, battery module, and battery pack of the third aspect of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

FIG. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

## Example 1

Preparation of silicone particles

Preparation of prepolymer: 1400g of deionized water and 7g of sodium dodecyl sulfate were added in a 5L three-necked bottle, respectively, stirred and emulsified at 1500 r/min for 30 min to obtain a homogeneous and stable emulsion, and then 645.68g of methyl acrylate, 79.59g of acrylonitrile, and 663.50g of methacryloyloxypropyl cage polysilsesquioxane were added in sequence (the molar ratio of methyl acrylate, acrylonitrile and methacryloyloxypropyl cage polysesquioxane was 15:3:2), and continued stirring at 1500 r/min for 30 min to obtain a homogeneous prepolymer.

Preparation of polymer: in a dry three-necked bottle, 3g of sodium dodecyl sulfate and 1000g of deionized water was added, emulsified with , high-speed stirring for 30min, to obtain a uniform and stable emulsion; and then a peristaltic pump was used to slowly drop the pre-polymer and the initiator solution prepared in the previous steps (dissolving 3g of potassium persulfate in 30g of deionized water to form the solution); when the dropwise addition was completed, the mixture was heated 90°C and held at this temperature for 0.5h, cooled to 40°C, and then the pH was adjusted to 7-8 with

ammonia, filtered, discharged, and the silicone particles with a number average molecular weight of 43676 was obtained by a drying process and noted as M1.

The silicone particles M1 had an average particle size D1 of 1.5 μm, a volume distribution particle size $D^1v90$ of about 1.6 μm, $D^1v50$ of about 1.3 μm, $D^1v10$ of about 0.3 μm, and a specific surface area of about 30 $m^2/g$.

Preparation of separator

A PE substrate was provided: a thickness of 4.5μm and a porosity of 40%.

Preparing a coating slurry: silicone particles M1, alumina particles, and binder polyacrylamide were mixed in water with a ratio (a ratio of 5:1:1) and formulated to form a coating slurry, wherein the average particle size D2 of the alumina particles was 0.75μm, the volume distribution particle sizes $D^1v90$ was about 0.8μm, $D^1v50$ was about 0.73μm, $D^1v10$ was about 0.2μm, and the specific surface area was about $8m^2/g$.

Applying: The prepared coating slurry was applied on both sides of the PE substrate by a coating machine, and the separator was obtained through drying and slitting processes, wherein the thickness of the coating was 4μm and the porosity of the coating was 40%.

Preparation of positive electrode plate

The active substance $LiNi_{1/3}Mn_{1/3}Co_{1/3}O_2$ (NCM333), the conductive agent acetylene black, and the binder polyvinylidene difluoride were mixed homogeneously in an appropriate amount of the solvent N-methylpyrrolidone (NMP) at a weight ratio of 94:3:3 to obtain the positive electrode slurry; the positive electrode slurry was applied on a positive electrode collector aluminum foil, and through drying, cold-pressing, slitting, cutting and other processes, the positive electrode plate was obtained.

Preparation of the negative electrode plate

The negative electrode active material artificial graphite, the conductive agent carbon black (Super P), the binder styrene-butadiene rubber (SBR), and sodium carboxymethyl cellulose (CMC) were mixed homogeneously in the appropriate amount of solvent deionized water at a mass ratio of 95:2:2:1 to obtain the negative electrode slurry; the negative electrode slurry was applied on the negative electrode collector copper foil, and through drying, cold-pressing, slitting, cutting and other processes, the negative electrode plate was obtained.

Preparation of electrolytic solution

Ethylene carbonate (EC) and ethyl methyl carbonate (EMC) were mixed at a mass ratio of 30:70 to obtain an organic solvent, and sufficiently dried $LiPF^6$ was dissolved in the above organic solvent to form an electrolytic solution with a concentration of 1 mol/L.

Preparation of secondary battery

The positive electrode plate, the separator, and the negative electrode plate were stacked in sequence and wound to obtain an electrode assembly; the electrode assembly was put into an outer package and dried, into which the electrolytic solution was then added, and a secondary battery was obtained after vacuum encapsulation, standing, formation, shaping and other processes.

**Examples 2-10**

The secondary battery was prepared by a method similar to that of Example 1, except the parameters related to the coating of the separator, which were detailed in Table 1.

**Comparative Examples 1-2**

The secondary battery was prepared by a method similar to that of Example 1, except the parameters related to the coating of the separator, which were detailed in Table 1.

**Examples 11-14**

The secondary battery was prepared by a method similar to that of Example 4, except that the coating of the

separator contained different mass contents of the first particles and the second particles, which were detailed in Table 2.

**Comparative Example 3**

The secondary battery was prepared by a method similar to that of Example 4, except that the coating of the separator contained different mass contents of the first particles and the second particles, which were detailed in Table 2.

Test Section

(1) Heat shrinkage of the separator

Preparation of sample: the separator prepared above was punched and cut into samples with a width of 50 mm and a length of 100 mm using a press machine, five parallel samples were taken and placed on A4 paper and fixed, and then the A4 paper containing the samples was placed on corrugated paper with a thickness of 1 mm to 5 mm.

Sample test: the A4 paper placed on top of the corrugated paper was put into a blast oven, the temperature of the blast oven was set to 150°C. After the temperature reached the set temperature and stabilized for 30 minutes, the timer was started, and after reaching the set time (1 hour in the present application), the length and width of the separator were measured, and the values were denoted as a and b, respectively.

Calculation of heat shrinkage: longitudinal (MD) heat shrinkage = $[(100-a)/100] \times 100\%$, transverse (TD) heat shrinkage = $[(50-b)/50] \times 100\%$, and taking the average value of 5 parallel samples as the test result.

(2) Test of wetted length

The separator was cut into samples with a width of 5 mm and a length of 100 mm, and the samples were placed horizontally after fixing the two ends of the samples; 0.5 mg of electrolytic solution was dropped in the center of the samples, and after 1 min had been reached, photos were taken and the length of the electrolytic solution's diffusion was measured, and the wetted length of the separator was obtained therefrom. In order to ensure the accuracy of the test results, a plurality of samples (e.g., 5 to 10) can be taken for testing, and the test results were obtained by calculating the average value. The electrolytic solution can be prepared as follows: ethylene carbonate (EC), ethyl methyl carbonate (EMC) and diethyl carbonate (DEC) were mixed at a mass ratio of 30: 50: 20 to obtain an organic solvent, and $LiPF^6$ that was sufficiently dried was dissolved in the above organic solvent to formulate an electrolytic solution with a concentration of 1 mol/L.

(3) Capacity retention rate of secondary battery

At 25°C, the secondary battery was charged with 1/3C constant current to 4.3V, then charged with 4.3V constant voltage to a current of 0.05C, standing for 5min, and then discharged with 1/3C to 2.8V, and the resulting capacity was recorded as the initial capacity $C_0$. The above steps were repeated, and the discharging capacity of the secondary battery after 1000 cycles was recorded as $C_{1000}$, then the capacity retention rate of the secondary battery was $P_{1000}=C_{1000}/C_0*100\%$.

Table 1 shown the test results of the coatings in Examples 1-10 and Comparative Examples 1-2 with different parameters, respectively.

Table 1

| No. | Coating | | | | | Heat shrinkage at 150°C for 1h (%) | | Wetted length (mm) | Capacity retention rate at 25°C after 1000 cycles (%) |
|---|---|---|---|---|---|---|---|---|---|
| | Type of first particle | Type of second particle | D1(μm) | D2(μm) | D1/D2 | MD | TD | | |
| Example 1 | Silicone particle M1 | Aluminum oxide | 1.5 | 0.75 | 2.0 | 1.03 | 1.28 | 30 | 92.9 |
| Example 2 | Silicone particle M1 | Polyamideimide particle | 1.5 | 0.5 | 3.0 | 0.2 | 0.25 | 35 | 93.3 |

(continued)

| No. | Coating | | | | | Heat shrinkage at 150°C for 1h (%) | | Wetted length (mm) | Capacity retention rate at 25°C after 1000 cycles (%) |
|---|---|---|---|---|---|---|---|---|---|
| | Type of first particle | Type of second particle | D1(μm) | D2(μm) | D1/D2 | MD | TD | | |
| Example 3 | Phenolic resin particle | Aluminum oxide | 1.49 | 0.4 | 3.7 | 0.18 | 0.14 | 40 | 94.7 |
| Example 4 | Polyamideimide particle | Magnesium oxide | 1.52 | 0.3 | 5.1 | 0.15 | 0.1 | 46 | 95.5 |
| Example 5 | Silicone particle M1 | Phenolic resin particle | 1.5 | 0.22 | 6.8 | 0.29 | 0.21 | 44 | 94.6 |
| Example 6 | Silicone particle M1 | Aluminum oxide | 1.0 | 0.51 | 2.0 | 1.89 | 1.74 | 33 | 92.5 |
| Example 7 | Silicone particle M1 | Polypropylene | 1.0 | 0.42 | 2.4 | 1.03 | 0.99 | 39 | 93.9 |
| Example 8 | Phenolic resin particle | Aluminum oxide | 1.03 | 0.33 | 3.1 | 0.54 | 0.49 | 45 | 94.2 |
| Example 9 | Polyamideimide particle | Magnesium oxide | 0.99 | 0.21 | 4.7 | 0.11 | 0.15 | 48 | 95.2 |
| Example 10 | Silicone particle M1 | Polyimide particle | 1.0 | 0.16 | 6.3 | 0.39 | 0.34 | 43 | 94.9 |
| Comparative Example 1 | silicone particle M1 | Aluminum oxide | 1.5 | 1.5 | 1 | 3 | 2.5 | 28 | 86.5 |
| Comparative Example 2 | Phenolic resin | Aluminum oxide | 0.5 | 1.5 | 0.33 | 2.4 | 2.3 | 26 | 85.1 |

According to the test results of Examples 1-10 and Comparative Examples 1-2 in Table 1, it can be seen that in the separator provided by the examples of the present application, the first particles were organic particles, and the average particle size D1 of the first particles in the coating and the average particle size D2 of the second particles in the coating satisfied the above relationship, so that the first particles and the second particles in the coating were better overlapped with each other, and when the substrate was subjected to heat shrinkage, the particles can be rapidly extruded against each other to provide a force opposite to the direction of shrinkage of the substrate, thereby improving the thermal safety performance of the secondary battery. In addition, the second particles were filled between the organic particles to form more voids in the coating, which in turn improves the wetting effect of the electrolytic solution on the separator to facilitate the transport of ions in the separator, thereby improving the cycling performance of the secondary battery.

Table 2 shown the test results of the coatings in Examples 4 and 11-14 and Comparative Example 3 with different mass percent of the first particles and the second particles, respectively.

Table 2

| No. | Coating | | | Heat shrinkage at 150°C for 1h (%) | | Wetted length (mm) | Capacity retention rate at 25°C after 1000 cycles (%) |
|---|---|---|---|---|---|---|---|
| | A (%) | B (%) | A/B | MD | TD | | |
| Example 4 | 75 | 15 | 5 | 0.15 | 0.18 | 46 | 95.5 |

(continued)

| No. | Coating | | | Heat shrinkage at 150°C for 1h (%) | | Wetted length (mm) | Capacity retention rate at 25°C after 1000 cycles (%) |
|---|---|---|---|---|---|---|---|
| | A (%) | B (%) | A/B | MD | TD | | |
| Example 11 | 70 | 20 | 3.5 | 2.31 | 1.99 | 35 | 94.6 |
| Example 12 | 72 | 18 | 4 | 1.03 | 0.97 | 40 | 95.1 |
| Example 13 | 78 | 12 | 6.5 | 0.18 | 0.22 | 45 | 93.9 |
| Example 14 | 80 | 10 | 8 | 0.19 | 0.15 | 43 | 92.3 |
| Comparative Example 3 | 90 | / | / | 5.34 | 6.05 | 20 | 90.1 |

According to the test results of Examples 4, 11-14 and Comparative Example 3 in Table 2, the weight of the silicone particles and the weight of the second particles in the coating to meet the appropriate ratio relationship will not only help to reduce the shrinkage degree of the separator to improve the thermal safety performance of the secondary batteries, but also enable the silicone particles to better overlap with each other to form more voids, further improving the wetting effect of the electrolytic solution to improve the cycling performance of the secondary batteries.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

**1.** A separator comprising:

a substrate, and
a coating provided on at least one side of the substrate, wherein the coating comprises first particles and second particles, the first particles being organic particles and having an average particle size denoted as D1, the second particles having an average particle size denoted as D2, such that the coating satisfies: $1 < D1/D2 \le 10$.

**2.** The separator according to claim 1, wherein $2 \le D1/D2 \le 8$; optionally, $3 \le D1/D2 \le 7$.

**3.** The separator according to claim 1 or 2, wherein $0.02\mu m \le D1 \le 3\mu m$, optionally, $0.5\mu m \le D1 \le 2\mu m$.

**4.** The separator according to any one of claims 1 to 3, wherein $0.01\mu m \le D2 \le 2\mu m$; optionally, $0.1\mu m \le D2 \le 1\mu m$.

**5.** The separator according to any one of claims 1 to 4, wherein the first particle satisfies at least one of the following:

(1) the first particles has a volume distribution particle size $D^1v90$ of $\le 3.0\ \mu m$, optionally $0.1\ \mu m \le D^1v90 \le 2.0\ \mu m$;
(2) the first particles has a volume distribution particle size $D^1v50$ of $\le 2\ \mu m$, optionally $0.01\ \mu m \le D^1v50 \le 1.5\ \mu m$;
(3) the first particles has a specific surface area of greater than or equal to 3 $m^2/g$, optionally 10 $m^2/g$-100 $m^2/g$; and
(4) the first particle has a particle size distribution $(D^1v90-D^1v10)/D^1v50$ of $\le 1.5$, optionally $0.5 \le (D^1v90-D^1v10)/D^1v50 \le 1.0$.

**6.** The separator according to any one of claims 1 to 5, wherein the second particle satisfies at least one of the following:

(1) the second particle has a volume distribution particle size $D^2v90$ of $\le 2\mu m$; optionally $0.3\mu m \le D^2v90 \le 1.5\mu m$;
(2) the second particle has a volume distribution particle size $D^2v50$ of $\le 1.5\mu m$; optionally $0.2\mu m \le D^2v50 \le 1\mu m$;
(3) the second particle has s specific surface area of greater than or equal to 10 $m^2/g$; and
(4) the second particle has a particle size distribution $(D^2v90-D^2v10)/D2v50$ of $\le 1.0$, optionally $0.2 \le (D^2v90-D^2v10)/D^2v50 \le 0.8$.

7. The separator according to any one of claims 1 to 6, wherein a weight percentage of the first particles in the coating is denoted as A, a weight percentage of the second particles in the coating is denoted as B, and the coating satisfies: $1 < A/B \leq 10$; optionally $3 \leq A/B \leq 6$.

8. The separator according to any one of claims 1 to 7, wherein a weight percentage of the first particles in the coating is denoted as A, a weight percentage of the second particles in the coating is denoted as B, and the coating satisfies: $A \geq 50\%$, optionally $70\% \leq A \leq 90\%$; and/or, the coating satisfies: $B \leq 35\%$, optionally $5\% \leq B \leq 25\%$.

9. The separator according to any one of claims 1 to 8, wherein the first particles comprise one or more of silicone particles, melamine formaldehyde resin particles, phenolic resin particles, polyester particles, polyimide particles, polyamideimide particles, polyarylamide particles, polyphenylene sulphide particles, polysulfone particles, polyethersulfone particles, polyetheretherketone particles, and polyarylene etherketone particles; optionally, the first particles comprise silicone particles.

10. The separator according to any one of claims 1 to 9, wherein the first particles comprise silicone particles, and the silicone particles comprise a first polymer comprising a first structural unit, a second structural unit, and a third structural unit;

wherein the first structural unit has a structure as shown in Formula (I):

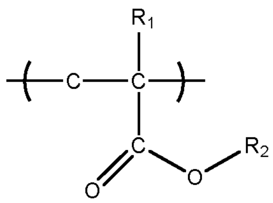

Formula (I)

in which $R_1$ includes one or more of a hydrogen atom, or a substituted or unsubstituted C1-C5 alkyl; optionally, $R_1$ includes one or more of a hydrogen atom, or a substituted or unsubstituted C1-C3 alkyl;
$R_2$ includes one or more of a substituted or unsubstituted C1-C20 alkyl, a substituted or unsubstituted C3-C20 cycloalkyl, or a substituted or unsubstituted C1-C20 hydroxyalkyl; optionally, $R_2$ includes one or more of a C1-C12 alkyl, a C3-C12 cycloalkyl, or a C1-C12 hydroxyalkyl;
wherein the second structural unit is shown in Formula (II):

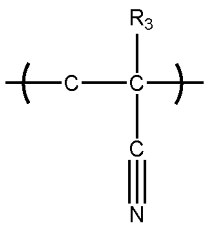

Formula (II)

in which $R_3$ includes one or more of a hydrogen atom, or a substituted or unsubstituted C1-C5 alkyl group; optionally, $R_3$ includes one or more of a hydrogen atom, or a substituted or unsubstituted C1-C3 alkyl group; and wherein the third structural unit is shown in Formula (III):

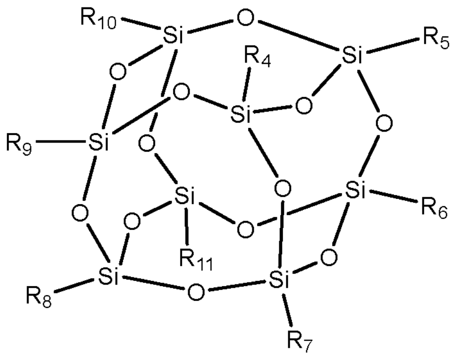

Formula (III)

in which each of $R_4$ to $R_{11}$ independently includes one or more of a substituted or unsubstituted C1-C10 alkyl group, or a structural unit as shown in Formula (III-1), wherein at least one of $R_4$ to $R_{11}$ is a structural unit as shown in Formula (III-1):

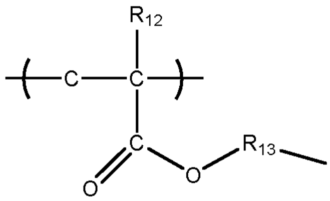

Formula (III-1)

in which $R_{12}$ includes one or more of a hydrogen atom, or a substituted or unsubstituted C1-C5 alkyl; optionally, $R_{12}$ includes one or more of a hydrogen atom, or a substituted or unsubstituted C1-C3 alkyl; and $R_{13}$ is selected from substituted or unsubstituted C1-C10 alkyls; optionally, $R_{13}$ is selected from substituted or unsubstituted C3-C10 alkyls.

**11.** The separator according to claim 10, wherein based on the total molar amount of the first structural unit, the second structural unit, and the third structural unit, the molar content of the first structural unit is denoted as a%, in which $65 \leq a \leq 95$; optionally, $70 \leq a \leq 85$; and/or

based on the total molar amount of the first structural unit, the second structural unit, and the third structural unit, the molar content of the second structural unit is denoted as b%, in which $0<b\leq15$; optionally, $5\leq b\leq10$; and/or based on the total molar amount of the first structural unit, the second structural unit, and the third structural unit, the molar content of the third structural unit is denoted as c%, in which $0<c\leq10$; optionally, $5\leq c\leq9$ .

**12.** The separator according to claim 10 or 11, wherein a molar content of the first structural unit is denoted as a%, a molar content of the second structural unit is denoted as b%, and a molar content of the third structural unit is denoted as c%, based on the total molar amount of the first structural unit, the second structural unit, and the third structural unit; and the silicone particles satisfy one or more of the conditions (1) to (3):

$$(1)\ 7 \leq a/b \leq 14;$$

$$(2)\ 8 \leq a/c \leq 16;$$

$$(3)\ a{:}b{:}c \text{ is } (13\text{-}15){:}(2\text{-}4){:}(2\text{-}4).$$

**13.** The separator according to any one of claims 1 to 12, wherein the silicone particles further comprise a second polymer comprising a structural unit shown in Formula (a):

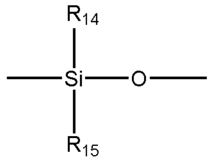

Formula (a)

in which $R_{14}$ and $R_{15}$ each independently include one or more of a substituted or unsubstituted C1-C10 alkyl, hydroxyl group, or amino group; optionally, $R_{14}$ and $R_{15}$ each independently include one or more of a substituted or unsubstituted C1-C6 alkyl, hydroxyl group, or amino group;
optionally, the second polymer comprises one or more of a polymethylsiloxane, a polydimethylsiloxane, a polydiethylsiloxane, a polymethylhydroxysiloxane, or a polymethylaminosiloxane.

**14.** The separator according to any one of claims 1 to 13, wherein the silicone particle has a number average molecular weight of 30,000-70,000, optionally 40,000-50,000.

**15.** The separator according to any one of claims 1 to 14, wherein based on the total mass of the silicone particles, the moisture content of the silicone particles is less than or equal to 3000μg/g; optionally 600μg/g-2800μg/g.

**16.** The separator according to any one of claims 1 to 15, wherein the second particles comprise one or more of inorganic particles, polymer particles; optionally, the second particles comprise inorganic particles.

**17.** The separator according to claim 16, wherein the inorganic particles comprise one or more selected from inorganic particles having a dielectric constant of 5 or higher, inorganic particles having the ability to transport reactive ions, and inorganic particles capable of undergoing electrochemical oxidation and reduction; and/or
the polymer particles comprise one or more of silicone particles, melamine formaldehyde resin particles, phenolic resin particles, polyester particles, polyimide particles, polyamideimide particles, polyarylamide particles, polyphenylene sulphide particles, polysulfone particles, polyethersulfone particles, polyetheretherketone particles, and polyarylene etherketone particles.

**18.** The separator according to any one of claims 1 to 17, wherein the substrate satisfies at least one of the following:

(1) the substrate has a thickness of less than or equal to 16 μm; optionally 3 μm-9 μm; and
(2) the substrate has a porosity of greater than or equal to 20%; optionally 25%-45%.

**19.** The separator according to any one of claims 1 to 18, wherein the coating satisfies at least one of the following:

(1) the coating has a thickness of 0.1μm-5μm; optionally 0.5μm-3μm; and
(2) the coating has a porosity of greater than or equal to 20%; optionally 25%-50%.

**20.** The separator according to any one of claims 1 to 19, wherein the separator satisfies at least one of the following:

(1) the separator has a longitudinal heat shrinkage rate of less than or equal to 3% at 150° C for 1h;
(2) the separator has a transverse heat shrinkage rate of less than or equal to 2% at 150°C for 1h;
(3) the separator has an air permeability of less than or equal to 200s/100mL, optionally 150s/100mL-200s/100mL;
(4) the separator has a longitudinal tensile strength of greater than or equal to 2700 $kg/cm^2$;
(5) the separator has a transverse tensile strength of greater than or equal to 2500 $kg/cm^2$;
(6) the separator has a wetted length of 20mm-100mm, optionally 40mm-70mm.

**21.** A method for preparing the separator according to any one of claims 1 to 20, comprising the steps of:

providing a substrate;
mixing first particles and second particles in a solvent to formulate a coating slurry;
applying the coating slurry on at least one side of the substrate to form a slurry coating, and drying and treating the slurry coating to form a coating to obtain the separator;
wherein the first particles are organic particles, the first particles have an average particle size denoted as D1, the second particles have an average particle size denoted as D2, and $1 < D1/D2 \leq 10$.

**22.** A secondary battery comprising the separator according to any one of claims 1 to 20 or the separator obtained by the method according to claim 21.

**23.** An electrical device comprising the secondary battery according to claim 22.

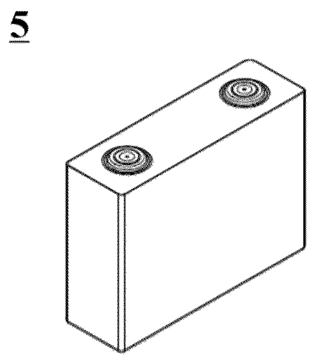


FIG. 1

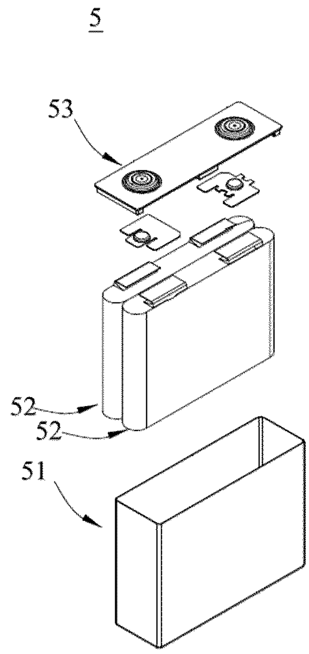


FIG. 2

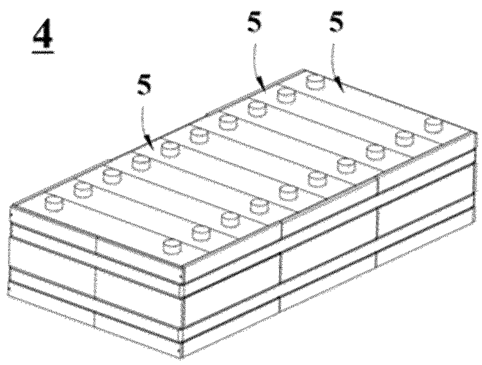


FIG. 3

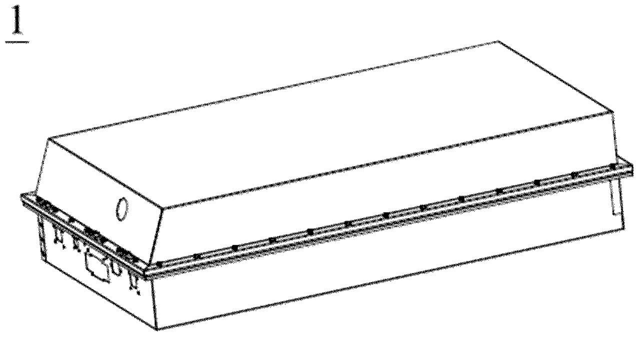


FIG. 4

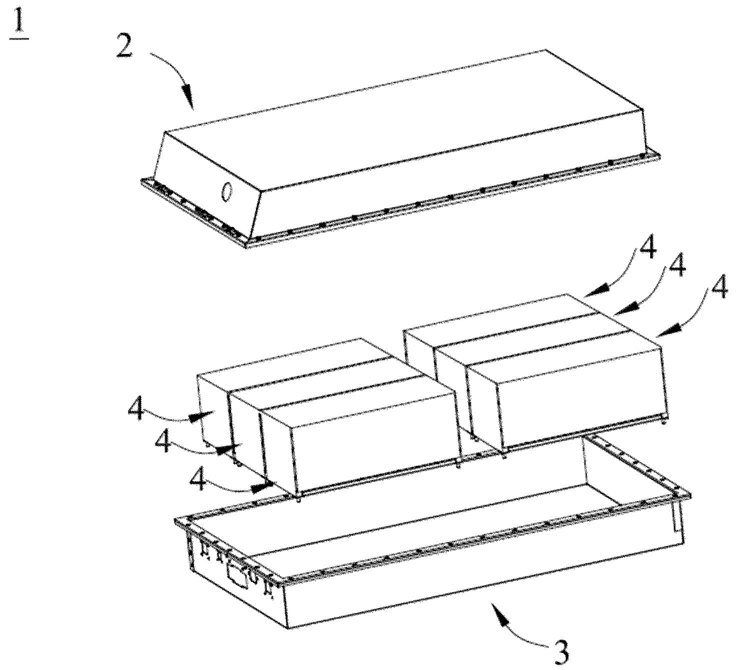


FIG. 5

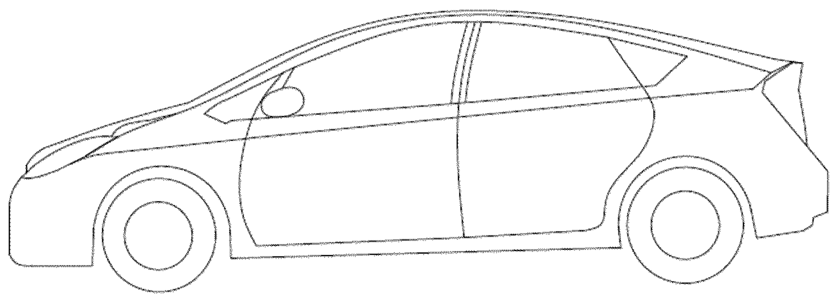

FIG. 6

**INTERNATIONAL SEARCH REPORT**

International application No. **PCT/CN2022/136441**

**A. CLASSIFICATION OF SUBJECT MATTER**

H01M50/409(2021.01)i; H01M50/431(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 隔膜, 隔离膜, 隔板, 有机, 无机, 颗粒, 粒子, 粒径, 尺寸, 大小, 丙烯酸, 酯, 丙烯腈, 倍半硅氧烷, separator, organic, inorganic, particle, size, D50, Dv50, acrylic acid, ester, acrylonitrile, AN, silsesquioxane, POSS

**C. DOCUMENTS CONSIDERED TO BE RELEVANT**

| Category* | Citation of document, with indication, where appropriate, of the relevant passages | Relevant to claim No. |
|---|---|---|
| X | CN 114846691 A (NINGDE CONTEMPORARY AMPEREX TECHNOLOGY CO., LTD.) 02 August 2022 (2022-08-02)<br>description, paragraphs 6-254 | 1-9, 13-23 |
| X | CN 115104219 A (NINGDE CONTEMPORARY AMPEREX TECHNOLOGY CO., LTD.) 23 September 2022 (2022-09-23)<br>description, paragraphs 6-235 | 1-9, 13-23 |
| A | KR 20220155022 A (SAMSUNG SDI CO., LTD.) 22 November 2022 (2022-11-22)<br>entire document | 1-23 |
| A | CN 106887552 A (SAMSUNG ELECTRONICS CO., LTD. et al.) 23 June 2017 (2017-06-23)<br>entire document | 1-23 |
| A | CN 104137300 A (TEIJIN LTD.) 05 November 2014 (2014-11-05)<br>entire document | 1-23 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 July 2023** | **14 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/136441**

| Patent document cited in search report | | | Publication date (day/month/year) | Patent family member(s) | | | Publication date (day/month/year) |
|---|---|---|---|---|---|---|---|
| CN | 114846691 | A | 02 August 2022 | None | | | |
| CN | 115104219 | A | 23 September 2022 | None | | | |
| KR | 20220155022 | A | 22 November 2022 | WO | 2022240227 | A1 | 17 November 2022 |
| CN | 106887552 | A | 23 June 2017 | US | 2017092915 | A1 | 30 March 2017 |
| | | | | US | 10490794 | B2 | 26 November 2019 |
| | | | | KR | 20170037453 | A | 04 April 2017 |
| | | | | EP | 3147966 | A1 | 29 March 2017 |
| | | | | EP | 3147966 | B1 | 19 December 2018 |
| CN | 104137300 | A | 05 November 2014 | WO | 2013133074 | A1 | 12 September 2013 |
| | | | | KR | 20140114428 | A | 26 September 2014 |
| | | | | KR | 101475791 | B1 | 23 December 2014 |
| | | | | JP | 5497245 | B2 | 21 May 2014 |
| | | | | JPWO | 2013133074 | A1 | 30 July 2015 |
| | | | | US | 2015236323 | A1 | 20 August 2015 |
| | | | | US | 9887406 | B2 | 06 February 2018 |
| | | | | TW | 201349637 | A | 01 December 2013 |
| | | | | TWI | 603523 | B | 21 October 2017 |
| | | | | CN | 108963165 | A | 07 December 2018 |

Form PCT/ISA/210 (patent family annex) (July 2022)